# EUROPEAN PATENT SPECIFICATION

(11) **EP 3 771 336 B1**
(45) Date of publication and mention of the grant of the patent: **02.12.2026**
(21) Application number: 20188839.3
(22) Date of filing: 31.07.2020
(51) Int. Cl.: A01N 37/02, A01N 43/90, A01N 65/26, A01P 17/00

(54) **REPELLENT COMPOSITION**
REPELLENT ZUSAMMENSETZUNG
COMPOSITION RÉPULSIVE

(30) Priority: 31.07.2019 EP 19000355
(43) Date of publication of application: 03.02.2021
(73) Proprietor: Athenion AG, 8002 Zürich (CH)
(72) Inventor: VÖLZ, Kirstin, 13505 Hohen Neuendorf (DE); BRYSCH, Wolfgang, 13505 Berlin (DE); VON WEGERER, Jörg, 13597 Berlin (DE)
(74) Representative: Gruber, Daniel

(56) References cited:
- EP-A1- 2 653 034
- WO-A1-00/72676
- WO-A1-2010/108680
- WO-A1-2011/103694
- WO-A1-2018/213443
- WO-A2-2010/088645
- DE-A1- 102012 221 966
- JUNWEI J. ZHU ET AL: "Better than DEET Repellent Compounds Derived from Coconut Oil", SCIENTIFIC REPORTS, vol. 8, no. 1, 19 September 2018 (2018-09-19), XP055635376, DOI: 10.1038/s41598-018-32373-7

## Description

The present invention refers to a repellent composition containing margosa oil, lauric acid and a spreading agent. Useful applications of this repellent compositions are also disclosed.

Repellents are substances that are applied to surfaces like the skin, the clothing or agricultural crops in order to repel animals, in general arthropods such as insects and arachnids, from this site without killing them.

Effective repellents are known in the art. One group are synthetic repellents such as DEET (*N*,*N*-diethyl-*m*-toluamide) and icaridin. While DEET has a good efficacy against a broad spectrum of mosquitoes the efficacy against ticks is unsatisfactory (Schreck et al. (1995) J Amer Mosquito Control Assoc, 136-140). The problem, however, is that they are not only repellent but at least in higher concentrations can cause unwanted physiological side effects. For example, DEET is an acetylcholine esterase inhibitor in insects and humans (Corbel et al. (2009) BMC Biology 7: 47). It can also be an irritant to the eye or mucosae. Sleeping disorders and affective disorders have also been associated with DEET. Further adverse effects are controversially discussed. When used in agriculture, only minor amounts are allowed for getting into the food chain.

The other major group are repellents of natural origin such as octanoic acid, decanoic acid, lauric acid, margosa (neem) oil, citronella oil, lemongrass, essential oils from *Melaleuca alternifolia* or lemon eucalyptus, catnip oil, beautyberry leaves or bog myrtle. They have a repellent action but as a single substance they are often not as strong as the synthetic repellents, and/or can only be applied in specific oily formulations.

In WO 2011/103694 and EP 2653034 a combination of decanoic acid, margosa oil and isopropyl myristate (and/or isopropyl laurate) as spreading agent is disclosed. Spreading agents facilitate the permeation of the active ingredient into the skin and a mostly horizontal spreading of the active ingredient in the adjacent dermal layers. This combination shows a good repellency in flea- or tick-infested animals.

However, decanoic acid has some serious disadvantages. Decanoic acid (as well as octanoic acid) has an unpleasant smell remembering of goats. This is rather uncomfortable for use in humans or for the pet owners. Decanoic acid confers a rather oleaginous consistency to the liquid compositions in which it is solved. When used in spot-on formulations, it leaves unpleasant fatty smears on the skin or the clothing, respectively in the fur of a pet. Decanoic acid (as well as octanoic acid) can cause serious skin irritations, particularly in the eye. When wrongly applied to a pet or used in larger amounts this is a health hazard. It was also observed that pets try to remove a spot-on composition from the fur with their paw, thereupon smearing it in their face or eyes. Decanoic acid was also found to be harmful to aquatic life with long lasting effects. In a standard test of aquatic toxicity with exposition to daphnids (*Daphnia magna*) an EC₅₀ of already 16 mg/l was found. When a human or a dog enters e.g. a lake for swimming the water may be thus contaminated. Decanoic acid has a rather low melting point (31.6°C). The body temperature of humans or pets is usually higher. When a solution with decanoic acid solved therein is applied to the body of a warm-blooded creature decanoic acid will start to evaporate from the solution. Hence the repellent effects are expected to persist only for a rather short time. This was also observed in the practical application of such a composition (for overview see https://pubchem.ncbi.nlm.nih.gov/compound/decanoic-acid, as of July 29th, 2020; assessment report on decanoic acid of the EU Standing Committee on Biocidal Products (2013) https://circabc.europa.eu/sd/a/65c74e5e-e5c7-4461-884c-be217ee8d832/Decanoic, as of July 29th 2020).

Therefore, there is a need of a new repellent composition with natural ingredients that ideally shows at least one of
- at least the same repellent efficacy with a good spreading behavior,
- an at least less unpleasant smell,
- a less smeary or oleaginous consistency when used as a spot-on product,
- less skin and eye irritation potential,
- less environmental hazard to aquatic life, and/or
- a longer lasting repellent efficacy,
always in comparison to the repellent composition described before.

Moreover, the production costs should be competitive in a contested market.

Surprisingly, the task could be solved with the repellent composition according to the invention:
Repellent composition, containing margosa oil or its extracts, lauric acid, and at least one C₁₂ - C₁₆ fatty acid ester.

The terms "repellent" or "repellent composition" in the scope of the present application refer to a compound or composition that deters insects from their preferred hosts (humans, animals, crofts) or suitable articles of manufacture. Most known repellents are not active poisons at all, but rather prevent damage to plants/animals or articles of manufacture by making food sources or living conditions unattractive or offensive. Typically, a repellent is a compound or composition that can be either topically applied to the host, or is a compound or composition that may be incorporated into a susceptible article to produce an repellent article that deters pests from the nearby three-dimensional space in which the host or article exists. In either case, the effect of the repellent is to drive the pests away from or to reject (1) the host, thereby minimizing the frequency of pest "bites" to the host; and/or (2) the pest susceptible article, thereby protecting the article from damage. Repellents may be in the form of gases (olfactory), liquids, or solids (gustatory).

Margosa oil is a generic term for oils, respectively extracts, from the seeds of *Azadirachta indica.* It is also known as neem oil, nimtree oil or Indian lilac oil. *Azadirachta indica* is a tree that grows mainly in the tropical and sub-tropical regions of the Indian subcontinent.

Margosa oil is used in traditional Indian medicine as e.g. in Ayuervedic medicine. It is believed to be beneficial in bacterial, viral or fungal infections, as an anthelmintic, antidiabetic, sedative, contraceptive, in tumor therapy and in skin diseases such as eczema and psoriasis (cf. Kluge (1996) Niembaum, die Kraft der indischen Wunderpflanze, Verlag Gesundheit und Natur; Subapriya and Nagini (2005) Curr Med Chem Anticancer Agents 5: 149-156; Gupta et al. (2017) Phytomedicine 34: 14-20; Saleem et al. (2018) Phytother Res 32: 1241-1272).

Margosa oil is known to be an arthropod repellent, particular for use as a spot-on preparation for humans and pets (cf. Mulla and Su (1999) J Am Mosq Control Assoc 15: 133-152; WO 2010/108680; EP 2653034).

Margosa oil is also proposed as for crop protection and as a non-synthetic biopesticide (cf. Gahukar (1995) Neem in plant protection, Agri-Horticultural Publishing House, Nagpur, India; Schmutterer (2005) Niempräparate (Neem, Nim). In: Schmutterer and Huber (Ed.): Natürliche Schädlingsbekämpfungsmittel; Ulmer Verlag, Germany; Chaudhary et al. (2017) Frontiers in Plant Science 8: 610).

A preferred margosa extract is obtained from *Azadirachta indica* seeds using high pressure under CO₂ atmosphere (e.g. available from Terra Nostra GmbH, Geisenfeld, Germany; CAS No. 84696-25-3). An aqueous margosa extract containing propylene glycol from the neem tree bark is available from Sigma-Aldrich (CAS No. 84696-25-3). Cold-pressed margosa oil (Plasma Neem^{®} Oil) is available from Plasma Power Private Limited, Chennai, India (CAS No. 8002-65-1).

Major ingredients of margosa oil are fatty acids such as oleic acid, stearic acid, linoleic acid and palmitic acid, either as free fatty acids or bound in the form of triglycerides. Further ingredients comprise limonoids such as azadirachtin A and azadirachtin B, nimbin, nimbinene, nimbandial, nimbolide, quercetin, azadirone, salannin, melantriol and meliacines.

The repellent effect is mainly attributed to azadirachtins (cf. Sidhu et al. (2004) Ind crops products 19: 69-75; ECHA - Proposal for Harmonized Classification and Labeling (2016) and to a lesser degree to salannin and melantriol. Margosa extract, cold-pressed oil of *Azadirachta indica* seeds without shells extracted with super-critical carbon dioxide). Preferentially, a margosa extract according to the invention should be free of aflatoxins.

Margosa extract is a yellow-brown fluid, having a density of 0.925 g cm-3, a refraction index of 1.380 at 20°C, a boiling point of 340°C and a vapor pressure of 3.8 x 10-7 Pa at 20°C (ECHA - Proposal for Harmonized Classification and Labeling (2016) Margosa extract, cold-pressed oil of *Azadirachta indica* seeds without shells extracted with super-critical carbon dioxide; Data sheet Sigma-Aldrich, Neem bark extract: aqueous, propylene glycol containing plant extract from neem bark, as of July 15th, 2017).

Less appealing is the unpleasant smell and the oily viscous consistency of margosa oil. Therefore, it is desirable to lower the percentage of margosa oil in a repellent composition.

Lauric acid (dodecanoic acid, C 12:0; CAS 143-07-7) is regarded as an endogenous fatty acid of generally low systemic toxicity. It has no hazardous physicochemical properties for humans, animals or aquatic life (cf. Regulation (EU) no. 528/2012 Assessment Report: Lauric Acid (2014)). Lauric acid is readily biodegradable. The smell is described as a faint odor of bay oil. Lauric acid is slightly more viscous than decanoic acid and thus less oleaginous (6.88 cP vs. 4.327 cP, at 50°C).

The present repellent composition with lauric acid shows a comparative or even better repellency against fleas and ticks than those of WO 2011/103694 and EP 2653034 (see Examples 1 - 7).

Zhu et al. (2018) Scientific Reports 8: 14053 reported that lauric acid and decanoic acid show a comparable protection against blood-sucking stable flies. Based on these data, WO 2018/213443 has been filed.

A major advantage of lauric acid in comparison to decanoic acid is the higher melting point (43.8°C vs. 31.6°C) and thus a lower vapor pressure (2.13 x 10⁻⁶ kPa vs. 4.88 x 10⁻⁵ kPa at 25°C). Therefore, lauric acid evaporates slower on warm-blooded creatures than decanoic acid. Consequently, the repellent effects are longer lasting. There is no need to repeat the application of the repellent composition at short intervals.

Moreover, lauric acid is an inexpensive substance.

Thus, the aforementioned criteria for an improved natural repellent composition are fulfilled by including lauric acid.

It is a natural repellent. In particular, a repellent effect on ticks has been described for humans and pets (WO 00/72676). Differential effects on insects and arachnoids are discussed.

WO 2010/088645 discloses a biocidal which contains a composition containing sodium lauryl sulfate and one or more C₆ - C₁₂ fatty acids, preferably lauric, capric and/or caprylic acid. In regulatory terms, this mixture is a biocide and not a repellent.

DE 10 2012 221966 describes a repellent composition for use on horses against flies. It comprises lauric acid, margosa oil and coconut oil which contains C₁₂ - C₁₆ fatty acids in the form of triglycerides. They are different from the esters used herein.

US 4,707,496 discloses an insect repellent soap composition with a variable soap mixture of caprylic acid, capric acid, lauric acid, myristic acid, palmitic acid, stearic acid, oleic acid and linoleic acid together with C₈-C₁₈ straight chain fatty acids, a repellent chemical and an effective residual insecticide.

JP 2004/307431 reveals a repellent action of a combination of a tropolone derivative such as hinokitiol and a polyvalent carboxylic acid ester. Herein the tropolone derivative can be a tropolone covalently bound to a carboxylic acid such as lauric acid.

US 2004/0265349 discloses a repellent composition comprising at least one hydrated compound of an unsaturated monoterpenoid together with at least one C₆-C₁₃ carboxylic acid which can be lauric acid.

In DE 10137085 an insect repellent containing a hydrated citronella and/or a hydrated isopulegol together with a C6-C13 carboxylic acid such as lauric acid is disclosed.

In the field of pesticides, lauric acid esters are proposed to be potency increasing agents for industrial pesticides (WO 1996/019111).

It is a bright white, powdery solid with a faint characteristic acid odor of bay oil or soap. It forms colorless needles, has a melting point of 44°C, a boiling point of 131°C at 1.3 mbar, is poorly soluble in water, but soluble in ethanol and diethyl ether. As a glyceride it can be found in coconut oil and palm kernel oil.

In comparison with DEET, a 10-fold lower concentration of lauric acid shows a similar efficacy. However, the duration of action at comparable concentrations is significantly longer for lauric acid than for DEET.

The main natural sources for lauric acid are coconut milk, coconut oil (41 - 46 wt.-%) and palm kernel oil (41 - 45 wt.-%). It can also be found in human breast milk (6.2 % of total fat), cow's milk (2.9%), and goat's milk (3.1%) (cf. Beare-Rogers et al. (2001) Pure and Applied Chemistry 73: 685-744).

*In vitro* experiments hint at a beneficial use in the treatment of acne (Nakatsuji et al. (2009) J Invest Dermatol 129: 2480-2488; Yang et al. (2009) Biomaterials 30: 6035-6040).

In general, a spreading agent is defined as a material, energy, or means used for affecting the spreading and displacement of one material for another material. In a type of wetting known as spreading wetting, a first liquid in contact with a solid is displaced by a second liquid (USPC Consolidated Glossary of the USPTO, as of July 19th, 2019). In particular, the term spreading agent refers to oily liquids that show outstandingly good distribution characteristics on or in the skin (cf. Keymer (1970) Pharm Ind 32: 577). In the field of topically applied agents it refers to auxiliary substances, respectively excipients that facilitate the spreading of an agent inside the skin or dermis layers or the mucosa in order to allow for an availability of an agent at skin areas different from the spot of application. The better the spreading characteristics of an agent the better it is suited to allow for extended effects over the skin.

A spreading agent must be differentiated from a permeation enhancer or penetration enhancer (synonyms: absorption promoter, sorption accelerant). These terms refer to substances used to increase the permeation of an active agent through the skin or the mucosa. In most cases, this is a topical effect, i.e. the permeation takes place right at the spot of application. In particular for topically administered pharmaceutical agents, it is often desirable that the pharmaceutical agent is facilitated to pass through all skin layers including the collagen / keratin scaffold and the subcutaneous tissue in order to reach the blood circulation, so that the pharmaceutical agent becomes systemically available. A spreading agent, however, is not used for this purpose. It is desirable that it allows for a rather horizontal spreading of an agent without rendering it systemically available so that the desired actions are limited to the upper skin layers.

In the case of repellents, it is desirable that a spreading agent shows good spreading characteristics on and in the skin, on surfaces like clothes, or on plant parts such as leaves and stems, in particular in spot-on applications. Further, it is preferable that such a spreading agent has a neutral to pleasant smell and does not display strong oily or smeary features.

Suitable spreading agents include surface active agents, such as surfactants, such as anionic surfactants (e.g. sodium laurylsulfate, fatty alcohol ether sulfates and monoethanolamine salts of mono-/di-alkylpolyglycolether orthophosphoric acid esters), cationic surfactants (e.g. cetyl trimethyl ammonium chloride) amphoteric surfactants (e.g. disodium-N-laurylaminodipropionate or lecithin), and non-ionic surfactants (e.g. polyoxyethylated castor oil, polyoxyethylated sorbitane monooleate, sorbitane monostearate, ethylalcohol, glycerol monosterate, polyoxyethylene stearate and alkylphenol polyglycol ether) as well as, in particular, polymeric surfactants, for example those based on polymethoxysiloxanes, silicones, fats and oils, such as, for example, silicone oils of different viscosities; fatty acid esters such as ethylstearate, di-n-butylester, lauric acid hexylester, dipropylene glycol pelargonate, esters of a branched fatty acid with a medium chain length and saturated C₁₆-C₁₈ fatty alcohols, isopropyl myristate, isopropyl palmitate, caprylic/capric acid esters from saturated fatty alcohols with a chain length of C₁₂-C₁₈, isopropyl stearate, oleic acid oleyl ester, oleic acid decyl ester, ethyloleate, lactic acid ethyl ester, cetearyl isononanoate, ethylhexyl palmitate, wax-like fatty acid esters, especially those from fats of duck oil glands, dibutyl phthalate, adipic acid diisopropyl esters and ester mixtures; triglycerides based on oleic acid, palmitic acid, linoleic acid, stearic acid, caprylic acid and capric acid, such as in particular caprylic/capric acid triglyceride, triglyceride mixtures with vegetable fatty acids with a chain length of C₈-C₁₂ or other especially selected natural fatty acids, partial glyceride mixtures of saturated and unsaturated fatty acids and mono and/or diglycerides of the C₈-C₁₀ fatty acids; fatty alcohols, such as isotridecyl alcohol, 2-octyldodecanol, cetylstearyl alcohol and oleyl alcohol; dicapryl ether; fatty acids, such as oleic acid, palmitic acid, linoleic acid, stearic acid, caprylic acid and capric acid, lactones, such as butyrolactone; phospholipids and phosphatidylcholines; natural oils such as sunflower oil or avocado oil, etc.

In general, poorly water-soluble to insoluble spreading agents are preferred.

Fatty acid esters are particularly preferred spreading agents, with isopropyl laurate (IPL), isopropyl myristate (IPM) and isopropyl palmitate (IPP) being selected with particular preference. Other preferred spreading agents include triglycerides such as caprylic/ capric acid triglyceride as well as triglyceride mixtures with natural fatty acids.

Isopropyl laurate (isopropyl dodecanoate, propan-2-yl dodecanoate, CAS No. 10233-13-3; abbreviation: IPL) is an ester of lauric acid (C₁₂ monocarbonic acid) and isopropyl alcohol.

Natural sources of IPL are e.g. corn oil and palm oil. IPL is also known as an emollient. It is used as a cosmetic raw material and as a lubricant additive in the mineral oil industry.

IPL is a colorless oily liquid, has a melting point of 4.2°C, a boiling point of 281.3°C at 760 mmHg, a viscosity of ca. 3.7 mPa·s at 20°C, a saponification number of 230 mg KOH/g and has a poor solubility in water, but is soluble in ethanol.

Advantageous features of IPL as a spreading agent in repellent compositions, preferentially spot-on compositions, were described in EP 2653034.

Isopropyl myristate (myristic acid isopropyl ester, myristic acid 2-propyl ester, nutmeg butter derivative; CAS No. 110-27-0; abbreviation: IPM) is an ester of myristic acid (C14 monocarbonic acid) and isopropyl alcohol which is present for example in butter, palm kernel oil and coconut oil. IPM is a polar emollient. It is an oily component used in cosmetics as a spreading agent, refattening agent and solubilizing agent. It is skin-friendly and enters easily into the skin. It is often used in skin creams, insect protection oils, sun protection oils, lipsticks etc.

IPM is a colorless, inodorous fluid, has as melting point of -5°C, a boiling point of 316°C, a viscosity of 5 - 6 mPa·s at 20°C and a saponification number of 202 - 212 mg KOH/g (Trigon; Memento of December 31st, 2011).

A particular advantage of IPM is that it is able to mask the garlic-like smell of the sulphurous components of margosa oil. A poor evaporation of the margosa oil solved in IPM and a fast absorption lead to a fast deposition in the deeper lipophilic layers of the epidermis. A further penetration into the ambiphilic layers of the cutis and subcutis was not observed. The composition is not removed from the skin by water sprinkling (cf. EP 2410861).

In the field of repellents, the use of IPM as a spreading agent was described for a composition containing margosa oil (EP 1587368; EP 2410861; US 6576223).

Isopropyl palmitate (palmitic acid 2-propyl ester, isopropyl hexadecanoate, propan-2-yl hexadecanoate, CAS No. 142-91-6; abbreviation: IPP) is an ester of palmitic acid (C₁₆ monocarbonic acid) and isopropyl alcohol.

In nature, it can be found in palm oil and coconut oil. In cosmetics, it is used primarily as a thickening agent in skincare products like baby oil, moisturizers, sunscreens, and conditioners.

IPP is a clear colorless liquid, has a melting point of 11 - 13°C, a boiling point of 340.7°C at 760 mmHg, a viscosity of 7.7 mPa·s at 20°C, a saponification number of 188 mg KOH/g and is immiscible with water but very miscible with e.g. diethyl ether or ethanol.

In topical repellent compositions, IPP is known as an emollient ester (US 6,355,264; US 9,072,299).

Thus, it is preferred that in the repellent composition according to the invention the at least one C₁₂ - C₁₆ fatty acid ester is a saturated C₁₂ - C₁₆ monocarboxylic acid esterified with a C₁ - C₄ alcohol.

The saturated C₁₂ - C₁₆ monocarboxylic acid in said at least one C₁₂ - C₁₆ fatty acid ester can be selected from the group comprising lauric acid (C 12:0), tridecanoic acid (C 13:0), myristic acid (C 14:0), pentadecanoic acid (C 15:0), palmitic acid (C 16:0).

Preferred are lauric acid, myristic acid and palmitic acid.

Said C₁ - C₄ alcohol can be selected from a group comprising methanol, ethanol, propanol, isopropanol, butanol, isobutanol, ethylene glycol (ethane-1,2-diol), 1,2-propylene glycol (1,2-propane diol), 1,3-propylene glycol (1,3-propane diol), 1,2-butane diol, 1,3-butane diol, 1,4-butane diol, allyl alcohol (prop-2-en-1-ol), 1,4-butyne diol, 2-butene-1,4-diol.

Preferred are ethanol, propanol and isopropanol, particularly preferred isopropanol.

Preferred C₁₂ - C₁₆ fatty acid esters according to the invention are therefore isopropyl laurate, isopropyl myristate and isopropyl palmitate. Particularly preferred is isopropyl myristate.

Surprisingly, it was found that the combination of the known repellents margosa oil and lauric acid is much more effective than would have been expected by the known efficacies of the single substances. Thus, there is by needs a supraadditive effect. This hints at different mechanisms of action of these two repellent substances.

Herein it was surprisingly found that a combination of 2.5 % margosa oil (w/w) and 2.5 % lauric acid (w/w) in the repellent composition according to the invention already lead to an almost complete, respectively complete repellent action on ticks and fleas (see Examples 1, 3 and 4). Through the combination of these two repellent substances their respective content in the repellent composition according to the invention can be considerably lowered. Thus, production costs can be considerably lowered, as above all margosa oil is a price-determining factor. Further, less active ingredients need to be applied to a human or a pet or in agriculture and thus less likely is any adverse side effect of these substances alone or in combination.

Typical effective amounts of margosa oil in repellent compositions are about 16 % (w/w), for example in a product based on margosa oil compositions according to EP 2410861 or EP 2653034. Typical effective amounts of lauric acid in repellent compositions are about 10 wt.-%, for example in a product based on a lauric acid composition according to Example 3 in WO 00/72676. For all these products, the repellent effect is good (ca. 70 - 90 %), but clearly below the efficacy of a repellent composition according to the invention.

A control experiment with 8 wt.-% margosa oil led to a relative repellency of fleas of only 35.3 % (Example 6). A similar control experiment with 15 wt.-% lauric acid led to a relative repellency of fleas of 98.0 % (Example 7). This comparatively high concentration of lauric acid was needed to reach the same efficacy level as the repellent compositions according to the invention.

The combination of 8 wt.-% margosa oil and 15 wt.-% lauric acid solved in isopropanol led to a relative repellency of ticks of 96.4 % (Example 2) and of fleas of 100 % (Example 5). Thus, there is an almost complete repellency of ticks and a complete repellency of fleas. The combination of margosa oil and lauric acid is clearly more efficient than the single components.

Surprisingly, the addition of a suitable spreading agent allowed for a reduction of the needed amount of margosa oil and lauric acid to 2.5 wt.-%, respectively, for achieving an almost complete repellency. At these concentrations, margosa oil and lauric acid alone or in combination would have a rather poor repellency.

Thus, the combination of margosa oil and lauric acid with a suitable spreading agent leads surprisingly to an increase in efficacy, but at much lower concentrations. This is a supraadditive effect.

Thus, it is preferred that the percentage of margosa oil per weight in the repellent composition according to the invention is in the range of 1 - 5%, more preferred 1.5 - 4 %, even more preferred 2 - 3% and most preferred 2.5%.

Thus, it is also preferred that the percentage of lauric acid per weight in the repellent composition according to the invention is in the range of 1 - 5%, more preferred 1.5 - 4 %, even more preferred 2 - 3% and most preferred 2.5%.

It is preferred that in the repellent composition according to the invention the relative weight ratio of margosa oil to lauric acid is in the range of 5:1 to 1:5, more preferred 4:1 to 1:4, even more preferred 3:1 to 1:3, still more preferred 2:1 to 1:2 and most preferred 1:1.

As shown before, the selected spreading agent is not just an excipient but contributes considerably to the combinatory efficacy of said two repellent substances. It was found that there must be a minimum content of said at least one spreading agent in the repellent composition according to the invention. Thus, it is preferred that the percentage of the at least one C₁₂ - C₁₆ fatty acid ester per weight in the repellent composition according to the invention is in the range of 80 - 98 %, more preferred 82 - 97 %, even more preferred 84 - 96 %, most preferred 85 - 95%.

Optionally, the repellent composition according to the invention may additionally contain 0 to 10 wt.-% of at least one excipient. Such excipients may be useful to improve the consistency, the appearance, the smell, the stability, the shelf-life and/or the efficacy of the repellent composition according to the invention. Preferentially, the percentage per weight of the at least one excipient in the repellent composition according to the invention is in the range of 1 - 8 %, more preferred 2 - 7 %, even more preferred 3 - 6 %, most preferred 4 - 5 %.

Such excipients according to the invention can be selected from the group comprising carriers; antioxidants; emulsion stabilizers; preservatives; propellants; emollients; sunscreen agents; UV absorbers; surfactants, emulsifiers or solubilizers; thickeners or consistency enhancers; pH regulators; fragrances; gel formers; stabilizers; colorants; penetration enhancers, substances for skin care; therapeutically or cosmetically active agents; and mixtures thereof.

Carriers allow the repellent composition according to the invention to be adjusted to an effective concentration of repellant molecules. When formulating a topical repellent, preferably, the repellant molecules are mixed in a dermatologically acceptable carrier. The carrier may further provide water repellency, prevent skin irritation, and/or soothe and condition skin. Factors to consider when selecting a carrier(s) for any formulation of repellent include commercial availability, cost, repellency, evaporation rate, odor, and stability. Preferably, the carrier should not be harmful to the environment. Suitable carriers can be organic and inorganic liquid, solid, or semi-solid carriers or carrier formulations usable in formulating repellent products. For example, the carrier may include silicone, petrolatum, lanolin or many of several other well-known carrier components.

Organic liquid carriers can be selected from the group comprising liquid aliphatic hydrocarbons (e.g., pentane, hexane, heptane, nonane, decane and their analogs) and liquid aromatic hydrocarbons. Examples of other liquid hydrocarbons include oils produced by the distillation of coal and the distillation of various types and grades of petrochemical stocks, including kerosene oils, which are obtained by fractional distillation of petroleum. Other petroleum oils include those generally referred to as agricultural spray oils (e.g., the so-called light and medium spray oils, consisting of middle fractions in the distillation of petroleum and which are only slightly volatile). Such oils are usually highly refined and may contain only minute amounts of unsaturated compounds. Such oils, moreover, are generally paraffin oils and accordingly can be emulsified with water and an emulsifier, diluted to lower concentrations, and used as sprays. Tall oils, obtained from sulfate digestion of wood pulp, like the paraffin oils, can similarly be used. Other organic liquid carriers can include liquid terpene hydrocarbons and terpene alcohols such as alpha-pinene, dipentene, terpineol, and the like. Other carriers include silicone, petrolatum, lanolin, liquid hydrocarbons, agricultural spray oils, paraffin oil, tall oils, liquid terpene hydrocarbons and terpene alcohols, aliphatic and aromatic alcohols, esters, aldehydes, ketones, mineral oil, higher alcohols, finely divided organic and inorganic solid materials. Still other liquid carriers can include organic solvents such as aliphatic and aromatic alcohols, esters, aldehydes, and ketones. Aliphatic monohydric alcohols include methyl, ethyl, normal-propyl, isopropyl, normal-butyl, sec-butyl, and tert-butyl alcohols. Suitable alcohols include glycols (such as ethylene and propylene glycol) and pinacols. Suitable polyhydroxy alcohols include glycerol, arabitol, erythritol, sorbitol, and the like. Finally, suitable cyclic alcohols include cyclopentyl and cyclohexyl alcohols. Conventional aromatic and aliphatic esters, aldehydes and ketones can be used as carriers, and occasionally are used in combination with the above-mentioned alcohols. Still other liquid carriers include relatively high-boiling petroleum products such as mineral oil and higher alcohols (such as cetyl alcohol). Additionally, conventional or so-called "stabilizers" (e.g., tert-butyl sulfinyl dimethyl dithiocarbonate) can be used in conjunction with, or as a component of, the carrier or carriers comprising the repellent compositions according to the invention.

Solid carriers, which can be used in the repellent compositions according to the invention include finely divided organic and inorganic solid materials. Suitable finely divided solid inorganic carriers include siliceous minerals such as synthetic and natural clay, bentonite, attapulgite, fuller's earth, diatomaceous earth, kaolin, mica, talc, finely divided quartz, and the like, as well as synthetically prepared siliceous materials, such as silica aerogels and precipitated and fume silicas. Examples of finely divided solid organic materials include cellulose, sawdust, synthetic organic polymers, and the like. Examples of semi-solid or colloidal carriers include waxy solids, gels (such as petroleum jelly), lanolin, and the like, and mixtures of well-known liquid and solid substances which can provide semi-solid carrier products, for providing effective repellency within the scope of the present invention.

Further suitable carriers are acetone; C₁₀-C₁₈ triglycerides; C₁₂-C₁₈ acid triglycerides; dipropyl, dibutyl, diisocetyl, diisopropyl or dimethyl oxalate; cyclo(ethoxy)methicone; amyl, methyl, butyl, ethyl, ethoxyethanol, ethoxydiglycol or tetrahydrofurfuryl acetate; ethoxydiglycol; kerosene; ethoxyethanol; diacetin; benzyl, diacetone, denatured ethyl, tetrahydrofurfuryl or oleyl alcohol; benzyl benzoate or laurate; ethylene carbonate; ethyl hexanediol; oil of *Bertholetta excelsa* nut, *Carthamus tinctorius, Helianthus annuus, Ricinus communis, Aleurites moluccana, Linum usitatissimum, Cocos nucifera, Zea mays, Pinus palustris, Sesamum indicum,* glycine soja, *Prunus amygdalus dulcis, Olea europaea, Elaeis guineensis, Prunus persica* kernel, *Cucurbita pepo, Brassica campestris, Oryza sativa, Oryza saliva, Juglans regia* or *Triicum vulgare*; dibutyl phthalate or sebacate; furfural; butoxy-diglycol, -propanol or -ethanol; diethoxyethyl succinate; diethyl oxalate, phthalate, sebacate or succinate; n- or t-butyl, hexyl or isopropyl alcohol; glycofurol; glycol; butylene, hexylene, diethylene, dipropylene, pentylene, propylene or triethylene glycol; C₆-C₂₀ linear, branched or cyclic alkane, alkanol or alkane polyol; butyloctanol; dihexyl, diisobutyl, diisodecyl, ditridecyl, dibutyl, diisocetyl, diisopropyl, dipropyl or diisononyl adipate; butyrolactone; 1,2,6-hexanediol; caprylic, capric, lauric or stearic triglyceride; isoamyl, isobutyl, isopropyl or propyl acetate; isobutoxypropanol; diisopropyl sebacate; dimethoxydiglycol; isobutyl, methyl or stearyl benzoate; isopropyl stearate; octyl, lauryl, myristyl, palmitoyl or stearyl benzoate; dimethyl phthalate, glutarate, maleate, adipate or succinate; dimethyl sulfone; dimethyl ether; dimethyl isosorbide (Arlasolve^{®}); dioctyl sebacate, adipate, phthalate or succinate; methyl ethyl ketone; methyl butyl ketone; 3-methoxybutanol; dipentene; methoxydigycol; diphenyl methane; methoxy-ethanol, - isopropanol or -methylbutanol; C₄-C₄₀₀ polyethylene, polypropylene, polyethylene/ether or polypropylene/ether glycol; perfluorodecalin; methylal; perfluorotetralin; phenoxyisopropanol; phenylpropanol; methyl hexyl ether; methylpropanediol; methyl pyrrolidone; thiolanediol; toluene; propanediol; triacetin; tributyl citrate; tributylcresylbutane; propylene carbonate; tricaprin; tricaprylin; trichloroethane; triheptanoin; trihydroxystearin; triisononanoin; triisostearin; trilaurin; trilinolein; trilinolenin; trimethylhexanol; trimyristin; trioctanoin; triolein; tripalmitin; trisebacin; tristearin; triundecanoin; xylene.

Suitable antioxidants can be selected from the group comprising acetyl cysteine; ascorbic acid; ascorbyl palmitate or stearate; t-butyl hydroquinone; cysteine; diamylhydroquinone; dicetyl, dilauryl, dimyristyl, distearyl or ditridecyl thiodipropionate; erythorbic acid; 2-ethylhexyl, lauryl, myristyl, palmitoyl or stearyl 4-methoxycinnamate; ethyl ferulate; ferulic acid; hydroquinone; p-hydroxyanisole; hydroxylamine sulfate; magnesium ascorbate; magnesium ascorbyl phosphate; octyl gallate; octyl, lauryl, myristyl, palmitoyl or stearyl salicylate; octocrylene; phloroglucinol; polyethylene glycol ether of tocopherol; potassium ascorbyl tocopheryl phosphate; potassium sulfite; propyl gallate; rutin; sodium ascorbate; sodium erythorbate; sodium sulfite; sodium thioglycolate; sorbityl furfural; tertiary butyl 4-methoxy phenol; thiodiglycol; thiodiglycolamide; thioglycolic acid; thiolactic acid; thiosalicylic acid; tocopherol; tocopheryl acetate; tocopheryl linoleate; tocopheryl nicotinate; tocopheryl succinate; tris(nonylphenyl)phosphite.

Emulsion stabilizers are materials would not act as primary emulsifiers but would prevent or reduce the coalescence of emulsified droplets. This could be accomplished, for example, by modifying the continuous or the disperse phase of the emulsion through electrical repulsion, from changes in viscosity, or from film formation on the droplet surface. Suitable emulsion stabilizers can be selected from the group comprising cetyl alcohol; montmorillonite; aluminum caprylate, stearate, laurate, palmitate, lanolate or myristate; C₁₅-C₁₈ glycol; dodecylhexadecanol; H(OCH₂CH₂)ₙOH where n=350 to 160,000; pectin; glucose pentaacetate; glycol oleate, palmitate, stearate or ricinoleate; (alkyl)cellulose; hydroxyalkyl (alkyl)cellulose; calcium laurate, myristate or stearate; C₁₀-C₅₀ alcohol such as cetyl, myristyl, stearyl, tallow or lauryl alcohol; polyvinyl acetate; lanolin; styrene/maleic anhydride copolymer; xanthan gum.

Preservatives may prevent or retard microbial growth and thus protect the composition (or products made therefrom) from spoilage or from inadvertent contamination by the consumer during use. Suitable preservatives can be selected from the group comprising ammonium benzoate or propionate; chloroxylenol; isobutylparaben; o-, m- or p-cresol; isodecylparaben; benzoic acid; isopropyl cresol, paraben or sorbate; benzotriazole; benzyl alcohol; magnesium benzoate; benzylparaben; dehydroacetic acid; magnesium propionate; 5-bromo-5-nitro-1,3-dioxane; diazolidinyl urea; magnesium salicylate; 2-bromo-2-nitropropane-1,3-diol; dibromopropamidine diisothionate; butyl benzoate; dimethyl hydroxymethyl pyrazole; butylparaben; dimethylol ethylene thiourea; calcium benzoate, salicylate, sorbate, paraben or propionate; dimethyl oxazolidine; methyl hydroxyl hydantoin; methyldibromo glutaronitrile; methylisothiazolinone; methylparaben; ethylparaben; chlorhexidine diacetate, digluconate or dihydrochloride; formaldehyde; glutaral; glyoxal; chloroacetamide; hexamidine; chlorobutanol; hexamidine diparaben; phenol; p-chloro-m-cresol; hexamidine paraben octyl, lauryl, myristyl, palmitoyl or stearyl salicylate; octyl, lauryl, myristyl, palmitoyl or stearyl benzoate; octocrylene; phenoxyethanol; chlorophene; 4-hydroxybenzoic acid; phenoxyethylparaben; p-chlorophenol; hydroxymethyl dioxoazabicyclooctane; phenoxyisopropanol; chlorothymol; imidazolidinyl urea; phenyl benzoate; phenyl mercuric acetate, benzoate, borate, bromide or chloride; potassium salicylate, sorbate, benzoate, propylparaben, butylparaben, ethylparaben, methylparaben, paraben, phenoxide, o-phenylphenate or propionate; propionic acid; propyl benzoate; phenylparaben; propylparaben; o-phenylphenol; silver borosilicate; silver magnesium aluminum phosphate; sorbic acid; sodium hydroxymethylglycinate, methylparaben, paraben, phenolsulfonate, phenoxide, o-phenylphenate, propionate, propylparaben, pyrithione, salicylate, sorbate, benzoate, butylparaben, p-chloro-m-cresol, dehydroacetate, ethylparaben, formate or hydroxymethane sulfonate; zinc pyrithione.

Propellant are chemicals used for expelling products from pressurized containers (aerosols). The functionality of a propellant depends on its vapor pressure at ambient temperature and its compressibility. Liquids or gases can be used as propellants as long as the pressure developed within the container is safely below the container's bursting pressure under normal storage and use conditions. Suitable propellants can be selected from the group comprising butane; CH₃CClF₂; nitrogen; carbon dioxide; CH₃CF₂; nitrous oxide; dimethyl ether; isobutane; pentane; ethane; isopentane; propane; CH₃CHF₂.

Emollients are cosmetic ingredients used for maintaining the soft, smooth, and pliable appearance of skin. They are thought to remain on the skin surface or in the stratum corneum to act as a lubricant, to reduce flaking, and to improve the skin's appearance. Suitable emollients can be selected from the group comprising acetylated lanolin or lanolin alcohol; bisphenylhexamethicone; *Bertholetta excelsa* nut oil; caprylic/capric glycerides; butoxyethyl stearate; dicaprylyl carbonate; caprylic/capric/succinic triglyceride; acetylated sucrose distearate; acetyl trihexyl citrate; butyl isostearate, myristate, oleate or stearate; caprylyl glycol; acetyl trioctyl citrate; cetearyl octanoate or palmitate; *Prunus armeniaca* kernel oil; cetyl acetate, caprylate, lactate, laurate, octanoate or oleate; arachidyl propionate; C₁₄-C₁₅ alcohols; cetylarachidol; *Argania spinosa* oil; C₁₂₋C₂₈ alkyl acetate, benzoate or lactate or octanoate; *Persea gratissima* oil; *Orbignya oleifera* oil; *Melissa officinalis* seed oil; C₂₄-C₂₈ alkyl methicone; C₁₂-C₁₃ alkyl octanoate; cetyl glycol, glycol isostearate or glycol palmitate; benzyl laurate; bis-diglyceryl polyacyladipate-1 or -2; *Camellia kissi* oil; isostearyl, myristyl, lauryl, isocetyl, pentadecyl, oleyl, tridecyl or undecyl alcohol; isostearyl glyceryl ether; isostearyl benzoate, lactate, neopentanoate, octanoate, palmitate or myristate; methyl stearate; *Rosa moschata* seed oil; hydroxycetylisostearate, *Isatis tinctoria* oil; isoamyl laurate; isobutyl myristate, palmitate, pelargonate or stearate; isopropyl stearate; isotridecyl isononanoate; myristyl isostearate, lactate, neopentanoate, octanoate or propionate; *Actinidia chinensis* seed oil; isocetyl isodecanoate, palmitate or stearate; lanolin; lanolin oil or wax; isodecyl citrate, hydroxystearate, laurate, myristate, neopentanoate, palmitate or stearate; neopentyl glycol dicaprylate, dicaprate, dilaurate or dioctanoate; nonyl acetate; lauryl glycol; octyl acetoxystearate; lauryl isostearate or lactate; octyldecanol; octyldodecanol; octyldodecyl benzoate, lactate, neopentanoate or octanoate; octyl, lauryl, myristyl, palmitoyl or stearyl benzoate isohexadecane; methyl benzoate, caproate, caprylate, caprate or glucose dioleate; isohexyl neopentanoate, palmitate or laurate; octyl hydroxystearate, laurate, isopalmitate, isostearate, myristate, neopentanoate, oleate, palmitate or stearate; methyl glucose isostearate, laurate, sesquicaprylate, sesquicaprate, sesquilaurate or sesquistearate; isopropyl hydroxycetyl ether; isopropyl hydroxystearate, isostearate, lanolate, laurate, linoleate, myristate or oleate; 2-oleamido-1,3-octadecanediol; oleyl acetate, lactate or oleate; methyl hydroxystearate, laurate, isostearate, myristate, oleate, palmitate or pelargonate; isosorbide laurate; *Passiflora edulis* oil; polyethylene glycol glycerides; polyglyceryl myristate, oleate, pentastearate or ricinoleate; polyglyceryl oleyl ether; polyethylene glycol tricapryl citrate, tricetyl Citrate, trilauryl Citrate, trimyristyl citrate or tristearyl citrate; polyethylene glycol castor oil; pentaerythrityl dioleate, distearate, stearate, tetrabenzoate or trioleate; polyglyceryl sesquioleate, stearate, tetraoleate, tetrastearate, caprate, caprylate, decalinoleate, laurate or isopalmitate; propylene glycol hydroxystearate, stearate, laurate, linoleate, myristate, ricinoleate, oleate, soyate or caprylate; propylene glycol myristyl ether or myristyl ether acetate; sucrose polyoleate, polypalmate, polystearate, ricinoleate, stearate, triacetate, polylaurate, polylinoleate, myristate, oleate, laurate or palmitate; polypropylene glycol lauryl, cetyl, stearyl, oleyl or pentaerythrityl ether; tridecyl neopentanoate, octanoate, stearate or isononanoate; stearyl acetate, benzoate or lactate stearyl glycol isostearate or citrate; polypropylene glycol/polyethylene glycol; trimethylolpropane or propene; trioctyl trimellitate; tris(tributoxysiloxy)methylsilane.

Sunscreen agents are defined as ingredients that absorb at least 85% of the radiation in the UV range at wavelengths from 290 - 320 nm but may or may not transmit radiation at wavelengths longer than 320 nm. Suitable sunscreen agents can be selected from the group comprising aminobenzoic acid (PABA), glyceryl aminobenzoate (glyceryl PABA); oxybenzone (benzophenone-3); cinoxate; homosalate; octyl dimethyl PABA; diethanolamine methoxycinnamate; 2-ethylhexyl, lauryl, myristyl, palmitoyl, or stearyl 4-methoxycinnamate; lawsone with dihydroxyacetone; phenylbenzimidazole sulfonic acid; menthyl anthranilate; red petrolatum; digalloyl trioleate; octocrylene; sulisobenzone (benzophenone-4); dioxybenzone (benzophenone-8); octyl methoxycinnamate; titanium dioxide; ethyl 4-[bis(hydroxypropyl)]aminobenzoate(ethyl dihydroxypropyl PABA); octyl salicylate; trolamine salicylate.

UV (ultraviolet light) absorbers serve to protect a product made from the repellent composition according to the invention from chemical or physical deterioration induced by ultraviolet light. UV absorbers, like sunscreen agents, have the ability to convert incident ultraviolet radiation into less damaging infrared radiation (heat). Suitable UV absorbers can be selected from the group comprising acetaminosalol; 3-benzylidene camphor; stilbenedisulfonate; allantoin PABA; disodium distyrylbiphenyl disulfonate; benzalphthalide; sulfonamide; drometrizole; benzophenone; benzylidene camphor sulfonic acid; ethyl dihydroxypropyl PABA; benzophenone substituted with one or more groups selected from hydroxyl, alkoxy, alkyl, halogen and sulfonate; benzyl salicylate; ethyl diisopropylcinnamate, methoxycinnamate or urocanate; bumetrizole; ethyl PABA; butyl methoxydibenzoylmethane; butyl PABA; etocrylene; cinoxate; ferulic acid; glyceryl octanoate dimethoxycinnamate; di-t-butyl hydroxybenzylidene camphor; glyceryl PABA; digalloyl trioleate; glycol salicylate; diisopropyl methyl cinnamate; isoamyl p-methoxycinnamate; disodium bisethylphenyl triaminotriazine; isopropylbenzyl salicylate; isopropyl dibenzoylmethane; octyl triazone; sodium urocanate; isopropyl methoxycinnamate; PABA; menthyl anthranilate or salicylate pentyl dimethyl PABA; terephthaylidene dicamphor sulfonic acid; 4-methylbenzylidene camphor; phenylbenzimidazole sulfonic acid; titanium dioxide; octocrylene; polyacrylamidomethyl benzylidene camphor; TriPABA panthenol; octrizole; potassium methoxycinnamate; urocanic acid; octyl dimethyl PABA; potassium phenylbenzimidazole sulfonate; octyl methoxycinnamate or salicylate; sodium phenylbenzimidazole sulfonate.

In repellent compositions surfactants, emulsifiers or solubilizers serve to reduce surface tension, to form complex films on the surface of emulsified droplets, to create a repulsive barrier on emulsified droplets to prevent their coalescence, to retard physical changes in emulsions throughout during shelf-life or to cause a solubilized agent to become part of a micelle formed by a surfactant. Suitable surfactants, emulsifiers or solubilizers can be selected from the group comprising C₅₀-C₆₅₀ linear or branched dihydroxy polyoxyethylene/polyoxypropylene block copolymer; C₅₀-C₆₅₀ branched polyhydroxy polyoxyethylene/polyoxypropylene block copolymer of ethylene diamine; C₁₂-C₃₃₀ ethoxylated alkyl phenol; C₁₆-C₁₄₀ polyethylene glycol ether of C₁₂-C₆₀ alcohols; carboxylic acid esters of C₁₂-C₃₃₀ ethoxylated alkyl phenol; ester of C₁₂-C₄₀ carboxylic acid and C₈-C₄₀ polyethylene glycol; ester of caprylic or capric triglyceride and C₈-C₄₀ polyethylene glycol; phosphoric acid esters of C₁₂-C₃₃₀ ethoxylated alkyl phenol; phosphoric acid esters and diesters of C₁₆-C₁₄₀ polyethylene glycol ether of C₁₂-C₆₀ alcohols; abietic acid; calcium stearoyl lactylate; cetethyl morpholinium ethosutfate; cetrimonium bromide, chloride, methosulfate or tosylate; cetyl alcohol; cetyl dimethicone co-polyol; cetyl glyceryl ether/glycerin copolymer; cetyl phosphate; cetearyl glucoside; dextrin behenate, laurate, myristate, palmitate or stearate; dicetyl phosphate; diethytaminoethyl laurate or stearate; dimethyl octynediol; dimyristyl phosphate; glyceryl arachidate, behenate, caprylate, caprate, cocoate, erucate, hydrogenated rosinate, hydroxystearate, isopalmitate, isostearate, isotridecanoate/stearate/adipate, lanolate, laurate, oleate, linoleate, linolenate, oleate, montanate, myristate, palmitate, stearate, palmitoleate, ricinoleate or uridecylenate; glycol octanoate; hydrogenated lecithin; hydrogenated palm glyceride; hydroxycetyl phosphate; hydroxyethyl glyceryl oleate and/or stearate; lanolin; laurtrimonium chloride; lauryl phosphate; lecithin; mannitan laurate or oleate; myristoyl methylalanine; palmitic acid; octoxyglyceryl behenate or palmitate; pelargonic acid; pentaerythrityl stearate; phosphatidylcholine; potassium laurate, myristate, oleate, lauryl hydroxypropyl sulfonate, cetyl phosphate, lauryl sulfate, palmate, palmitate, ricinoleate or stearate; sodium palmate, palmitate, phthalate stearyl amide, ricinoleate, stearate, stearyl sulfate, trideceth sulfate, tridecyl sulfate, undecylenate, lauroyl lactylate, lauryl phosphate, myristate, oleate, oleoyl lactylate, behenoyl lactylate, caproyl lactylate, caprylate, isostearoyl lactylate or laurate; propylene glycol behenate, caprylate, hydroxystearate, isostearate, laurate, linoleate, unolenate, myristate, oleate, ricinoleate or stearate; sorbitan caprylate, diisostearate, dioleate, distearate, isostearate, laurate, oleate, palmitate, sesquiisostearate, sesquioleate, sesquistearate, stearate, triisostearate, trioleate or tristearate; raffinose oleate; stearic acid; stearoyl lactylic acid; stearyl alcohol; sucrose dilaurate, distearate, laurate, myristate, oleate, palmitate, polylaurate, polylinoleate, polyoleate, polypalmate or polystearate; C₃₂-C₈₂ polyethylene glycol ether of behenyl alcohol; C₂₀-C₁₀₆ polyethylene glycol ether of cetyl alcohol; C₂₈-C₈₀ polyethylene glycol ether of cetyl or oleyl alcohol; C₂₀-C₇₀ polyethylene glycol ether of cetyl and/or stearyl alcohol; C₂₀-C₈₀ polyethylene glycol ether of cholesterol; C₁₆-C₂₄ polyethylene glycol ether of decyl alcohol; C₄₀-C₈₀ polyethylene glycol ether of dehydrocholesterol; C₂₀-C₆₀ polyethylene glycol ether of isocetyl alcohol; C₁₈-C₃₀ polyethylene glycol ether of isodecyl alcohol; C₁₈-C₄₀ polyethylene glycol ether of isolauryl alcohol; C₂₀-C₁₂₀ polyethylene glycol ether of isostearyl alcohol; C₂₀-C₁₂₀ polyethylene glycol ether of glyceril caprate, caprylate, laurate, myristate, oleate, palmitate or stearate; C₁₄-C₁₀₀ polyethylene glycol ether of lauryl alcohol; C₁₆-C₂₄ polyethylene glycol ether of myristyl alcohol; C₂₀-C₇₀ polyethylene glycol ether of oleyl alcohol; C₁₀-C₁₀₀ polyethylene/polypropylene glycol ether of butyl alcohol; C₂₀-C₁₀₆ polyethylene/polypropylene glycol ether of cetyl alcohol; C₂₀-C₁₀₀ polyethylene/polypropylene glycol ether of decyl alcohol; C₁₄-C₁₀₀ polyethylene/polypropylene glycol ether of lauryl alcohol; carboxylic acid ester of C₂₀-C₁₂₀ polyethylene glycol ether of isostearyl alcohol; carboxylic acid esters of C₁₄-C₁₀₀ polyethylene glycol ether of lauryl alcohol; carboxylic acid ester of C₁₆-C₂₄ polyethylene glycol ether of myristyl alcohol; citric acid diesters of C₁₄-C₁₀₀ polyethylene glycol ether of lauryl alcohol; isopropyl stearate; lauric acid ester of C₃₀-C₁₂₀ polyethylene glycol ether of sorbitol; octyl, lauryl, myristyl, palmitoyl or stearyl salicylate; phosphoric acid ester of C₂₀-C₁₀₆ polyethylene glycol ether of cetyl alcohol; phosphoric acid ester of C₂₀-C₁₂₀ polyethylene glycol ether of isostearyl alcohol; phosphoric acid diesters of C₁₄-C₁₀₀ polyethylene glycol ether of lauryl alcohol; phosphoric acid esters and/or diesters of C₂₀-C₇₀ polyethylene glycol ether of oleyl alcohol; stearic acid ester of C₁₅-C₃₀ polyethylene glycol ether of glycerin; stearic acid ester of C₂₀-C₆₀ polyethylene glycol ether of isocetyl alcohol; stearic acid ester of C₂₀-C₁₂₀ polyethylene glycol ether of isostearyl alcohol; diethanolamine salt of phosphoric acid ester of C₂₀-C₁₀₆ polyethylene glycol ether of cetyl alcohol; diethanolamine salt of phosphoric acid ester of C₂₀-C₇₀ polyethylene glycol ether of cetyl and/or stearyl alcohol; diethanolamine salt of phosphoric acid ester of C₂₀-C₇₀ polyethylene glycol ether of oleyl alcohol; disodium salt of citric acid ester of C₁₄-C₁₀₀ polyethylene glycol ether of lauryl alcohol; disodium salt of phosphoric acid ester of C₁₄-C₁₀₀ polyethylene glycol ether of lauryl alcohol; disodium salt of phosphoric acid ester of C₂₀-C₇₀ polyethylene glycol ether of oleyl alcohol; monoethanolamine salt of phosphoric acid ester of C₂₀-C₇₀ polyethylene glycol ether of cetyl and/or stearyl alcohol; C₁₂-C₁₂₀ polyethylene glycol diester of behenic, capric, caprylic, lauric, oleic, octanoic, palmitic or stearic acid; polyesters of C₆-C₄₀ polyglycerin and behenic, capric, caprylic, lauric, oleic, octanoic, palmitic or stearic acid.

Suitable thickeners or consistency enhancers for the repellent composition according to the invention can be selected from the group comprising, but not limited to, acrylates polymer, acrylates/C10-30 alkyl acrylate crosspolymer, agar, ammonium alginate, amylopectin, carrageenan, cellulose, cellulose gum, cocamide mea, glyceryl stearate, hydrated silica, PEG-150 distearate, PEG-55 propylene glycol oleate, polyvinyl alcohol, potassium chloride, sodium acrylates copolymer, sodium chloride, VP/hexadecane copolymer, xanthan gum.

pH regulation is essential for the efficacy and stability of the repellent compositions according to the invention. Suitable pH regulators comprise acidity regulators, acidifiers, alkalization agents and neutralization agents. They can be selected from the group comprising acetic acid, hydrochloric acid, aminomethyl propanol, ammonia, ammonium bicarbonate, potassium acetate, sodium acetate, sodium diacetate, calcium acetate, carbon dioxide, malic acid, fumaric acid, sodium lactate, sodium bicarbonate, sodium metaphosphate, sodium trimetaphosphate, sodium phosphate, potassium lactate, calcium lactate, ammonium lactate, magnesium lactate, citric acid, mono-, di-, trisodium citrate, mono-, di-, tripotassium citrate, mono-, di-, tricalcium citrate, tartaric acid, mono-, disodium tartrate, mono-, dipotassium tartrate, sodium potassium tartrate, disodium phosphate, disodium pyrophosphate, orthophosphoric acid, lecithin citrate, magnesium citrate, ammonium malate, sodium malate, sodium hydrogen malate, calcium malate, calcium hydrogen malate, adipic acid, sodium adipate, potassium adipate, ammonium adipate, succinic acid, sodium fumarate, potassium fumarate, calcium fumarate, ammonium fumarate, 1,4-heptonolactone, triammonium citrate, ammonium ferric citrate, calcium glycerophosphate, calcium chloride, isopropyl citrate, potassium carbonate, potassium bicarbonate, potassium phosphate, tetrapotassium pyrophosphate, ammonium carbonate, magnesium carbonate, magnesium bicarbonate, ferrous carbonate, ammonium sulfate, aluminum potassium sulfate, aluminum ammonium sulfate, sodium hydroxide, potassium hydroxide, ammonium hydroxide, ammonium chloride, magnesium hydroxide, gluconic acid, ethanolamine, triethanolamine.

Suitable chelating agents are for example sodium benzoate and sodium salicylate.

Suitable fragrances (aromatic and flavoring substances) comprise above all essential oils that can be used for this purpose. In general, this term refers to volatile extracts from plants or parts of plants with the respective characteristic smell. They can be extracted from plants or parts of plants by steam distillation.

Examples are: Essential oils, respectively aromatic substances from sage, cloves, chamomile, anise, star anise, thyme, tea tree, peppermint, mint oil, menthol, camphor, cineol, eucalyptus oil, Eucalyptus citriodora oil, mango, figs, lavender oil, chamomile blossoms, pine needles, cypress, oranges, rosewood, plum, currant, cherry, birch leaves, cinnamon, limes, grapefruit, tangerine, juniper, valerian, vanillin (e.g. Vanille doux), citrus lemon peel oil, lemon balm, lemon grass, palmarosa, cranberry, pomegranate, rosemary, ginger, pineapple, guava, echinacea, Rosa indica flower extract, Jasmin officinale flower extract, ivy leave extract, blueberry, kaki, neroli oil, patchouli oil, sandalwood oil, melons, etc. or mixtures thereof, as well as mixtures of menthol, peppermint and star anise oil or menthol and cherry flavor, as well as benzyl alcohol, methyl phenylbutanol.

These fragrances can be included in repellent compositions according to the invention in the range of 0.0001 to 10 wt.-%, preferred 0.001 to 6 wt.-%, more preferred 0.001 to 4 wt.-%, most preferred 0.01 to 1 wt.-%, with regard to the total composition. Application- or single case-related it may be advantageous to use differing quantities.

Suitable gel formers can be selected from the group comprising, but not limited to, agar, algin, alginic acid, bentonite, carbomer, carrageenan, hectorite, hydroxyethyl cellulose, hydroxypropyl cellulose, polyvinyl alcohol, polyvinyl pyrrolidone, sodium carbomer.

Stabilizers are substances that can be added to prevent unwanted changes. Though stabilizers are not real emulsifiers they may also contribute to the stability of repellent compositions according to the invention. Suitable examples for stabilizers are oxystearin, xanthan gum, agar, oat gum, guar gum, tara gum, polyoxyethene stearate, aspartame-acesulfame salt, amylase, proteases, papain, bromelain, ficin, invertase, polydextrose, polyvinyl pyrrolidone, polyvinyl polypyrrolidone, triethyl citrate, maltitol, maltitol syrup, cetearyl alcohol, cetyl hydroxymethylcellulose, cocamide mea, disodium EDTA, EDTA, etidronic acid, hydroxymethylcellulose, microcrystalline cellulose, pentasodium pentetate, potassium alginate, sodium carbomer, sodium citrate, sodium gluconate, tetrasodium EDTA, tocopherol, trisodium EDTA.

Colorants (pigments, dyestuff) are excipients that bestow a colorization to a repellent composition according to the invention. Examples therefor include, but are not limited to, inorganic pigments, organic pigments, lakes, pearlescent pigments, iridescent or optically variable pigments, and mixtures thereof. A pigment should be understood to mean inorganic or organic, white or colored particles. The pigments may optionally be surface-treated within the scope of the present invention but are not limited to treatments such as silicones, perfluorinated compounds, lecithin, and amino acids.

Representative examples of inorganic pigments useful in a repellent composition according to present invention include those selected from the group consisting of rutile or anatase titanium dioxide, coded in the Color Index under the reference CI 77,891; black, yellow, red and brown iron oxides, coded under references CI 77,499, 77,492 and, 77,491; manganese violet (CI 77,742); ultramarine blue (CI 77,007); chromium oxide (CI 77,288); chromium hydrate (CI 77,289); and ferric blue (CI 77,510) and mixtures thereof.

Representative examples of organic pigments and lakes include, but are not limited to, D&C Red No. 19 (CI 45,170), D&C Red No. 9 (CI 15,585), D&C Red No. 21 (CI 45,380), D&C Orange No. 4 (CI 15,510), D&C Orange No. 5 (CI 45,370), D&C Red No. 27 (CI 45,410), D&C Red No. 13 (CI 15,630), D&C Red No. 7 (CI 15,850), D&C Red No. 6 (CI 15,850), D&C Yellow No. 5 (CI 19,140), D&C Red No. 36 (CI 12,085), D&C Orange No. 10 (CI 45,425), D&C Yellow No. 6 (CI 15,985), D&C Red No. 30 (CI 73,360), D&C Red No. 3 (CI 45,430) and the dye or lakes based on Cochineal Carmine (CI 75,570) and mixtures thereof.

Representative examples of pearlescent pigments include those selected from the group consisting of the white pearlescent pigments such as mica coated with titanium oxide, mica coated with titanium dioxide, bismuth oxychloride, titanium oxychloride, colored pearlescent pigments such as titanium mica with iron oxides, titanium mica with ferric blue, chromium oxide and the like, titanium mica with an organic pigment of the above-mentioned type as well as those based on bismuth oxychloride and mixtures thereof.

Further examples of colorants or pigments include Acid Red 195, aluminum stearate, anthocyanins, beta vulgaris, bromocresol green, bromothymol blue, calcium stearate, capsanthin, capsorubin, caramel, CI 1006, CI 10020, CI 10316, CI 11680, CI 11710, CI 11725, CI 11920, CI 12010, CI 12085, CI 12120, CI 12370, CI 12420, CI 12480, CI 12490, CI 12700, CI 13015, CI 14270, CI 14700, CI 14720, CI 14815, CI 15510, CI 15525, CI 15580, CI 15620, CI 15630, CI 15800, CI 15850, CI 15865, CI 15880, CI 15980, CI 15985, CI 16035, CI 16185, CI 16230, CI 16255, CI 16290, CI 17200, CI 18050, CI 18130, CI 18690, CI 18736, CI 18820, CI 18965, CI 19140, CI 20040, CI 20470, CI 21100, CI 21108, CI 21230, CI 24790, CI 27755, CI 28440, CI 40215, CI 40800, CI 40820, CI 40825, CI 40850, CI 42045, CI 42051, CI 42053, CI 42080, CI 42090, CI 42100, CI 42170, CI 42510, CI 42520, CI 42735, CI 44045, CI 44090, CI 45100, CI 45190, CI 45220, CI 45350, CI 45370, CI 45380, CI 45396, CI 45405, CI 45410, CI 45430, CI 47000, CI 47005, CI 50325, CI 50240, CI 51319, CI 58000, CI 59040, CI 60724, CI 60725, CI 60730, CI 61565, CI 62570, CI 61585, CI 62045, CI 69800, CI 69825, CI 71105, CI 73000, CI 73015, CI 73360, CI 73385, CI 73900, CI 73915, CI 74100, CI 74160, CI 74180, CI 74260, CI 75100, CI 75120, CI 75125, CI 75130, CI 75135, CI 75170, CI 75300, CI 75470, CI 75810, CI 77000, CI 77002, CI 77004, CI 77007, CI 77015, CI 77120, CI 77163, CI 77220, CI 77231, CI 77266, CI 77266 (nano), CI 77267, CI 77268:1, CI 77288, CI 77289, CI 77346, CI 77400, CI 77480, CI 77489, CI 77491, CI 77492, CI 77499, CI 77510, CI 77713, CI 77742, CI 77745, CI 77820, CI 77891, CI 77947, lactoflavin, magnesium stearate, riboflavin, zinc stearate.

The precise amount and type of colorant or pigment employed in the repellent compositions of the present invention will depend on the color, intensity and use of the repellent composition and, as a result, will be determined by those skilled in the art.

Penetration enhancers are chemical substances that temporarily diminish the barrier of the skin and promote or accelerate the absorption of repellent agents into the upper skin layers. Suitable penetration enhancers can be selected from the group comprising, but not limited to, dimethyl isosorbide (Arlasolve^{®}), dimethyl sulfoxide (DMSO) and its analogues, dimethyl formamide (DMF), azone (1-dodecylazacycloheptan-2-one), pyrrolidones such as 2-pyrrolidone, fatty acids such as oleic acid, lauric acid, myristic acid and capric acid, glycols such as diethylene glycol and tetraethylene glycol, nonic surfactants such as polyoxyethylene-2-oleyl ether and polyoxyethylene-2-stearyl ether, terpenes, terpenoids and sesquiterpenes such as those from essential oils of eucalyptus, chenopodium and ylang-ylang, oxazolidinones such as 4-decyloxazolidin-2-one, turpentine oil, pine oil, menthol.

Suitable substances for skin care can be selected from the group comprising, but not limited to, moistening or moisturizing agents such as evening primrose oil, borage oil, jojoba oil, *Aloe vera* gel, Vitamin F, panthenol, and mixtures thereof; and healing/revitalizing/regenerating agents such as Hippophae (sea buckthorn) oil, tea tree oil, vitamin A, allantoin and derivatives, carotenoids, carrot seed extract and oil, patchouli essential oil, and mixtures thereof.

Exemplary therapeutic or cosmetically active ingredients useful in the repellent compositions of the invention include fungicides, sunscreening agents, sunblocking agents, vitamins, tanning agents, plant extracts, anti-inflammatory agents, antioxidants, radical scavenging agents, retinoids, alpha-hydroxy acids, emollients, antiseptics, antibiotics, antibacterial agents or antihistamines, and may be present in an amount effective for achieving the therapeutic or cosmetic result desired.

In a particularly preferred embodiment, the repellent composition according to the invention contains 2.5 wt.-% margosa oil, 2.5 wt.-% lauric acid, 85 to 95 wt.-% isopropyl myristate and 0 to 10 wt.-% of an excipient, as defined before.

In one preferred embodiment, the repellent composition according to the invention contains 2.5 wt.-% margosa oil, 2.5 wt.-% lauric acid and 95 wt.-% isopropyl myristate.

In yet another preferred embodiment, the repellent composition according to the invention contains 2.5 wt.-% margosa oil, 2.5 wt.-% lauric acid, 94 wt.-% isopropyl myristate, 0.75 wt.-% jojoba oil and 0.25 wt.-% evening primrose oil.

Suitable product forms for the repellent compositions according to the invention are, without being limiting, pastes, ointments, creams, gels, skin oils, sticks, sprays, lotions, solutions, tinctures, emulsions, powders, flakes, granulates, microcapsules, aerosols or shampoos for the use in humans and pets.

In plant protection a product containing a repellent composition according to the invention may have the form of a granulate, powder or spray. Sprays may include also slow release formulations. Sprays are preferred.

According to the invention such a repellent composition can also be applied onto specific surfaces such as textiles, knittings, cardboard or paper. These specific surfaces can be for example attached to the clothing of a human or textiles on a pet.

Such specific surfaces may have the shape of strips, rings, tapes, collars, cuffs, garters or the like. Suitable textiles or knittings can be made of natural or synthetic fibers or threads.

Repellent compositions according to the invention can be used for repelling arthropods such as insects (adult states (imagoes) as well as non-adult states such as larvae and pupae) and arachnids.

Insects that are typically regarded as pests include, without being limiting, ants, wood ants, bees, black flies, chiggers, fleas, green head flies, mosquitoes, stable flies, tsetse flies, wasps, termites, houseflies, bugs, bed bugs, kissing bugs, cockroaches, lice, roaches, wood lice, flour, bean and carpet beetles, moths, cloth moths, gypsy moths, silverfish, weevils, aphids, hemipterans, thrips, lepidopteran, dipteran and coleopteran larvae, locusts, crickets, woodworms, bookworms,

Arachnids that are typically regarded as pests include, without being limiting, ticks, mites, dust mites, grass mites, spider mites, *Sarcoptes scabiei.*

In another aspect, this application refers to a repellent composition according to the invention for non-therapeutic use for topical application to living creatures.

Preferentially, said living creature is a human, a dog, a cat or a horse. Other possible animal hosts for the use of a repellent composition according to the invention are rodents, guinea pigs, pigeons and snakes.

In a preferred embodiment, the repellent composition according to the invention is a spot-on formulation.

An alternative administration form according to the invention is a pour-on formulation.

The term "spot-on" refers to fluid application forms of antiparasitic agents that are going to be applied at a single spot on the skin. The active agent(s) either permeate the skin to become systemically available or they spread on the skin surface, respectively in the upper skin layers. Spot-on formulations are often used for pets and are used prophylactically and/or therapeutically. A typical application spot is the neck, since there the pets are not able to lick off the spot-on formulation or to remove it with a paw. Larger amounts should be applied at several spots.

In larger animals so-called "pour-on" and "line-on" formulations are frequently used. Herein, the repellent composition is applied in a single line on the animal's back line.

Characteristic amounts for a spot-on dose are max. 10 ml per spot, for a pour-on (or a line-on dose) min. 5 ml (Kayne and Jepson (2004) Veterinary Pharmacy, Pharmaceutical Press).

Further usual application forms include sprays and imbued dog collars, harnesses or coats and imbued horse blankets and bridles (for overview: DE 101 17 676 A1, DE 35 31 920 A1, DE 35 29 693 A1, GB-A-2088212, EP 0 518 989 B1 and DE 691 26 776 T2).

Thus, the present disclosure relates also to a repellent spray containing margosa oil or its extracts, lauric acid, and at least one C₁₂ - C₁₆ fatty acid ester.

Thus, the present disclosure relates also to a dog collar, harness or coat imbued with a repellent composition containing margosa oil or its extracts, lauric acid, and at least one C₁₂ - C₁₆ fatty acid ester.

Thus, the present disclosure relates also to a horse blanket or bridles imbued with a repellent composition containing margosa oil or its extracts, lauric acid, and at least one C₁₂ - C₁₆ fatty acid ester.

In another aspect the present application relates to a fenestrated receptacle in the interior space of which a cloth can be placed that is imbued with a repellent composition containing margosa oil or its extracts, lauric acid, and at least one C₁₂ - C₁₆ fatty acid ester. Such a fenestrated receptacle can be attached with lugs to a dog collar, harness or coat or a horse blanket or bridles. This allows for a continuous use of the fenestrated receptacle with a cloth renewed from time to time. Such fenestrated receptacles including the lugs can be made of plastic, metal or fabric.

In yet another aspect, the present application refers to the repellent composition according to the invention for non-therapeutic use as arthropod repellent in agriculture.

In preferred embodiments, a repellent composition according to the invention is used in agriculture in combination with at least one pesticide.

Said at least one pesticide is selected from a group comprising herbicides, insecticides, acaricides, algicides, nematicides, molluscicides, piscicides, avicides, rodenticides, bactericides, virucides, fungicides and slimicides.

In general, all pesticides known in the art can be combined with the repellent composition according to the invention. Preferred are those pesticides that are approved for agricultural use in the respective country where a use is intended.

Herbicides are agents that kill weeds and other plants that grow where they are not wanted. Suitable herbicides for a combination with a repellent composition according to the invention can be selected, without being limiting, from the group comprising aminopyralid, atrazine, citrus oil (D-limonene), clopyralid, CGM (corn gluten meal), dicamba, 2,4-D (2,4-dichlorophenoxayacetic acid), fluazifop, fluroxypyr, glufosinate ammonium, glyphosate, imazamox, imazapic, imazapyr, linuron, MCPA (2-methyl-4-chlorophenoxyacetic acid), metolachlor, paraquat, PCBs (polychlorinated biphenyls), pendimethalin, pentachlorophenol, picloram, saline, sodium chlorate, sulfonylureas such as flazasulfuron and metsulfuron-methyl, TCDD (2,3,7,8-tetrachlorodibenzo-p-dioxin), 2,4,5-T (2,4,5-trichlorophenoxyacetic acid), triclopyr, vinegar, water steam.

Insecticides are agents that kill insects and other arthropods. Suitable insecticides for a combination with a repellent composition according to the invention can be selected, without being limiting, from the group comprising organochlorides such as aldrin, chlordane, chlordecone, DDT (dichlorodiphenyltrichloroethane), dieldrin, endosulfan, endrin, heptachlor, hexachlorobenzene, lindane (gamma-hexachlorocyclohexane), methoxychlor, mirex, pentachlorophenol, TDE (dichlorodiphenyldichloroethane); organophosphates such as acephate, azinphos-methyl, bensulide, chlorethoxyfos, chlorpyrifos, chlorpyriphos-methyl, diazinon, DDVP (dichlorvos), dicrotophos, dimethoate, disulfoton, ethoprop, fenamiphos, fenitrothion, fenthion, fosthiazate, malathion, methamidophos, methidathion, mevinphos, monocrotophos, naled, omethoate, oxydemeton-methyl, parathion, parathion-methyl, phorate, phosalone, phosmet, phostebupirim, phoxim, pirimiphos-methyl, profenofos, terbufos, tetrachlorvinphos, tribufos, trichlorfon; pyrethroids such as allethrin, bifenthrin, cyhalothrin and lambda-cyhalothrin, cyfluthrin, deltamethrin, etofenprox, fenvalerate, permethrin, phenothrin, prallethrin, resmethrin, tetramethrin, tralomethrin, transfluthrin; neonicotinoids such as acetamiprid, clothianidin, imidacloprid, nithiazine, thiacloprid, thiamethoxam; carbamates such as aldicarb, bendiocarb, carbofuran, carbaryl, dioxacarb, fenobucarb, fenoxycarb, isoprocarb, methomyl, 2-(1-methylpropyl)phenyl methylcarbamate; ryanoids such as chlorantraniliprole, cyantraniliprole, flubendiamide; insect growth regulators such as benzoylureas (diflubenzuron, flufenoxuron), cyromazine, methoprene, hydroprene, tebufenozide; insecticides derived from plants or microorganisms such as anabasine, anethole, annonin, asimina, caffeine, carapa, cinnamaldehyde, cinnamon leaf oil, cinnamyl acetate, citral, deguelin, derris, *Desmodium caudatum,* eugenol, linalool, myristicin, nicotine, oregano oil, *Peganum harmala,* polyketide, pyrethrum, *Quassia spec.,* ryanodine, spinosad (spinosyn A), spinosyn D, tetranortriterpenoid, thymol; biologicals such as *Bacillus sphaericus, Bacillus thuringiensis, Bacillus thuringiensis aizawi, Bacillus thuringiensis israelensis, Bacillus thuringiensis kurstaki, Bacillus thuringiensis tenebrionis,* granulovirus, *Lecanicilium lecanii,* nuclear *Polyhedrosis* virus; diatomaceous earth; borate, borax, boric acid, maltodextrin.

Acaricides (miticides) are substances that kill mites that feed on plants and animals. Suitable i acaricides for a combination with a repellent composition according to the invention can be selected, without being limiting, from the group comprising permethrin, ivermectin, antibiotic miticides, carbamate miticides, dienochlor miticides, formamidine miticides, organophosphate miticides, diatomaceous earth, dicofol, lime sulfur, abamectin, acequinocyl, bifenazatem chlorfenapyr, chlofenteine, cyflumetofen, cypermethrin, etoxazole, fenazaquin, fenpyroximate, hexythiazox, imidacloprid, propargite, pyridaben, spiromesifen, spirotetramat. Algicides (algaecides) are agents that control algae in lakes, canals, swimming pools, water tanks, and other sites. Suitable algicides for a combination with a repellent composition according to the invention can be selected, without being limiting, from the group comprising benzalkonium chloride, bethoxazin, copper sulfate, cybutryne, dichlone, dichlorophen, diuron, endothall, fentin, hydrated lime, isoproturon, methabenzthiazuron, nabam, oxyfluorfen, pentachlorophenyl laurate, quinoclamine, quinonamid, simazine, terbutryn, tiodonium.

Nematicides are agents that kill nematodes. Suitable nematicides for a combination with a repellent composition according to the invention can be selected, without being limiting, from the group comprising aldicarb, DBCP (1,2-dibromo-3-chloropropane), garlic-derived polysulfide, root exudate of *Tagetes spec.,* superheated steam.

Molluscicides are agents that kill snails and slugs. Suitable molluscicides for a combination with a repellent composition according to the invention can be selected, without being limiting, from the group comprising metal salts such as iron(III) phosphate, aluminum sulfate, ferric sodium EDTA (sodium ferric ethylenediaminetetraacetate), metaldehyde, methiocarb and acetylcholinesterase inhibitors.

Piscicides are agents that are poisonous to parasitic and invasive fish species. Suitable piscicides for a combination with a repellent composition according to the invention can be selected, without being limiting, from the group comprising rotenone, saponins, TFM (3-trifluoromethyl-4-nitrophenol), niclosamide and antimycin A.

Avicides are agents that are poisonous to birds. Suitable avicides for a combination with a repellent composition according to the invention can be selected, without being limiting, from the group comprising strychnine, DRC-1339 (3-chloro-4-methylaniline hydrochloride), CPTH (3-chloro-p-toluidine), avitrol (4-aminopyridine) and chloralose.

Rodenticides are agents that control mice and other rodents. Suitable rodenticides for a combination with a repellent composition according to the invention can be selected, without being limiting, from the group comprising anticoagulants such as warfarin, coumatetralyl, difenacoum, brodifacoum, flocoumafen, bromadiolone, diphacinone, chlorophacinone, pindone, difethialone, sulfaquinoxaline; metal phosphides such as aluminum phosphide, calcium phosphide, magnesium phosphide, zinc phosphide; ANTU (alpha-naphthylthiourea); arsenic trioxide; barium carbonate; bromethalin, chloralose, crimidine, 1,3-difluoro-2-propanol, 2,4-dinitrophenol, endrin, fluoroacetamide, hydrogen cyanide, oleandrin, phosacetim, white phosphorus, pyrinuron, scilliroside, sodium fluoroacetate, strychnine, tetramine (tetramethylenedisulfotetramine), thallium sulfate.

Bactericides in the scope of the present application are agents that kill, inhibit or out-compete bacteria that are regarded as detrimental in agriculture. Suitable bactericides for a combination with a repellent composition according to the invention can be selected, without being limiting, from the group comprising disinfectants such as hypochlorites, chloramines, dichloroisocyanurate, trichloroisocyanurate, wet chlorine, chlorine dioxide, peracetic acid, potassium persulfate, sodium perborate, sodium percarbonate, urea perhydrate, povidone-iodine, Lugol's solution, iodine tincture, iodinated nonionic surfactants, ethanol, 1-propanol, isopropanol, 2-phenoxyethanol, 1-phenoxypropanol, 2-phenoxypropanol, phenol, thymol, hexachlorophene, triclosan, trichlorophenol, pentachlorophenol, benzalkonium chloride, cetyl trimethylammonium bromide, cetyl trimethylammonium chloride, didecyldimethylammonium chloride, cetylpyridinium chloride, benzethonium chloride, chlorhexidine, glucoprotamine, octenidine dihydrochloride, ozone, permanganate solutions, colloidal silver, silver nitrate, mercury chloride, phenylmercury salts, copper sulfate, copper oxide-chloride, phosphoric acid, sulfuric acid, amidosulfuric acid, toluenesulfonic acid, sodium hydroxide, potassium hydroxide, calcium hydroxide; antiseptics such as Dakin's solution, sodium hypochlorite, potassium hypochlorite, sodium benzenesulfochloramide, iodopovidone, Lugol's solution, urea perhydrate, peracetic acids, alcohols, sorbic acid, benzoic acid, lactic acid, salicylic acid, hexachlorophene, triclosan, dibromol, benzalkonium, chlorhexidine, octenidine solutions; antibiotics such as imipenem, meropenem, ertapenem, cephalosporins, aztreonam, penicillins such as penicillin G and penicillin V, piperacillin, mezlocillin, ampicillin, amoxicillin, flucloxacillin, methicillin, oxacillin, clavulanic acid, sulbactam, tazobactam, sultamicillin, fosfomycin, teicoplanin, vancomycin, bacitracin, colistin, gramicidin, polymyxin B, tyrothricin, teixobactin, fosmidomycin, amikacin, gentamicin, kanamycin, neomycin, netilmicin, streptomycin, tobramycin, chloramphenicol, fusidic acid, cethromycin, narbomycin, telithromycin, clindamycin, lincomycin, daptomycin, dalfopristin, quinupristin, azithromycin, clarithromycin, erythromycin, roxithromycin, linezolid, doxycyclin, minocyclin, tetracyclin, oxytetracyclin, tigecyclin, norfloxacin, enoxacin, ciprofloxacin, ofloxacin, levofloxacin, moxifloxacin, metronidazol, tinidazol, aminocoumarin, sulfadiazine, sulfadoxine, sulfamethoxazole, sulfasalazine, pyrimethamine, trimethoprim, rifampicin.

Virucides in the scope of the present application are agents that deactivates or destroys viruses that are regarded as detrimental in agriculture. Suitable virucides for a combination with a repellent composition according to the invention can be selected, without being limiting, from the group comprising bleach, cyanovirin-N, griffithsin, interferon, Lysol, NVC-422, scytovirin, urumin, Virkon, Zonrox, V-Bind viricide.

Fungicides in the scope of the present application are agents that kill fungi including blights, mildews, molds and rusts that are regarded as detrimental in agriculture. Suitable fungicides for a combination with a repellent composition according to the invention can be selected, without being limiting, from the group comprising tea tree oil, citronella oil, jojoba oil, nimbin, oregano oil, rosemary oil, monocerin, milk, *Bacillus subtilis, Ucocladium oudemansii,* kelp, *Ampelomyces quisqualis,* antifungal drugs such as abafungin, amphotericin B, candicidin, filipin, hamycin, natamycin, nystatin, rimocidin, bifonazole, butoconazole, clotrimazole, econazole, fenticonazole, isoconazole, ketoconazole, luliconazole, miconazole, omoconazole, oxiconazole, sertaconazole, sulconazole, tioconazole, albaconazole, efinaconazole, epoxiconazole, fluconazole, isavuconazole, itraconazole, posaconazole, propiconazole, ravuconazole, terconazole, voriconazole, amorolfine, butenafine, nafitifine, terbinafine, anidulafungin, caspofungin, micafungin, benzoic acid, ciclopirox, flucytosine, griseofulvin, haloprogin, tolnaftate, undecylic acid, crystal violet, balsam of Peru.

Slimicides in the scope of the present application are broad-spectrum agents that kill microorganisms such as algae, bacteria, fungi and slime molds that are regarded as detrimental in agriculture. Suitable slimicides for a combination with a repellent composition according to the invention can be found among the respective above-mentioned groups.

### Embodiments

Embodiment 1: The repellent composition consists of 2.5 wt.-% margosa oil, 2.5 wt.-% lauric acid and 95.0 wt.-% isopropyl myristate.

Embodiment 2: The repellent composition consists of 2.5 wt.-% margosa oil, 2.5 wt.-% lauric acid, 94.0 wt.-% isopropyl myristate, 0.75 wt.-% jojoba oil and 0.25 wt.-% evening primrose oil.

Embodiment 3: The repellent composition consists of 2.5 wt.-% margosa oil, 2.5 wt.-% lauric acid, 91.0 wt.-% isopropyl laurate, 2.0 wt.-% dimethyl isosorbide and 2.0 wt.-% glyceryl stearate.

Embodiment 4: The repellent composition consists of 2.5 wt.-% margosa oil, 2.5 wt.-% lauric acid, 91.0 wt.-% isopropyl palmitate, 2.0 wt.-% ethanol and 2.0 wt.-% dimethyl isosorbide.

Embodiment 5: The repellent composition consists of 1.5 wt.-% margosa oil, 4.5 wt.-% lauric acid, 85.0 wt.-% isopropyl palmitate, 3.0 wt.-% glycerin, 3.0 wt.-% cetearyl alcohol, 2.0 wt.-% glyceryl stearate, 0.15 wt.-% allantoin and 0.85 wt.-% scent Vanille doux.

Embodiment 6: The repellent composition consists of 4.5 wt.-% margosa oil, 1.5 wt.-% lauric acid, 85.0 wt.-% isopropyl myristate, 4.0 wt.-% dicaprylyl carbonate (Cetiol CC^{®}), 3.0 wt.-% caprylic/capric acid triglyceride (Myritol312^{®}), 1.0 wt.-% citric acid, 0.6 wt.-% sodium benzoate and 0.4 wt.-% sandalwood essential oil.

Embodiment 7: The repellent composition consists of 3.0 wt.-% margosa oil, 2.0 wt.-% lauric acid, 86.0 wt.-% isopropyl myristate, 3.0 wt.-% cetearyl alcohol, 3.0 wt.-% dicaprylyl carbonate (Cetiol CC^{®}), 2.0 wt.-% sorbitan monostearate and 1.0 wt.-% thyme essential oil.

Embodiment 8: The repellent composition consists of 2.0 wt.-% margosa oil, 3.0 wt.-% lauric acid, 89.0 wt.-% isopropyl laurate, 3.0 wt.-% caprylic/capric acid triglyceride (Myritol312^{®}), 2.0 wt.-% sunflower oil, 0.8 wt.-% lemongrass essential oil and 0.2 wt.-% alpha-tocopherol.

Embodiment 9: The repellent composition consists of 4.0 wt.-% margosa oil, 4.0 wt.-% lauric acid, 89.0 wt.-% isopropyl myristate, 4.0 wt.-% dicaprylyl carbonate (Cetiol CC^{®}), 5.0 wt.-% titanium dioxide, 0.6 wt.-% zinc stearate and 0.4 wt.-% ascorbyl palmitate.

These embodiments serve as examples how a repellent composition according to the invention can be formulated. It is understood that all aforementioned excipients can be admixed in any combination inside an overall percentage range of up to 10 wt.-%, depending on the specific requirements of a product containing said repellent composition.

### Examples

The active ingredients and excipients tested in the following examples were purchased from: Terra Nostra, Geisenfeld, Germany (margosa oil); Syskem Chemie GmbH, Wuppertal, Germany (lauric acid); Hansen-Rosenthal KG, Hamburg, Germany (isopropyl laurate, isopropyl myristate, isopropyl palmitate); Merck KGaA, Darmstadt, Germany (isopropanol); Deike-Chemie, Bechtolsheim, Germany (jojoba oil, evening primrose oil).

### Example 1: Efficacy test against ticks of Repellent Composition 1 (spot-on)

A Moving Object Bioassay (MOB) was conducted as described by Dautel et al. (2013, Ticks and Tickborne Diseases 4: 256- 263). In short, a single tick on a wooden rod approaches a heated, slowly rotating vertical drum. It is attracted by the warmth of the drum similar as to a warm leg and changes to the moving surface of the drum. When the attachment site is covered by repellent, the repellent effect can be detected either by (i) a reduced number of ticks approaching the drum, (ii) a reduced number of ticks transferring to the drum or (iii) an increased number of ticks falling off the drum surface compared to untreated controls. It is thus possible to discriminate between contact repellents and substances acting over short distance. All ticks in a given test that (i) did not walk towards the drum, (ii) did not change to the drum or (iii) dropped off the drum were regarded as repelled.

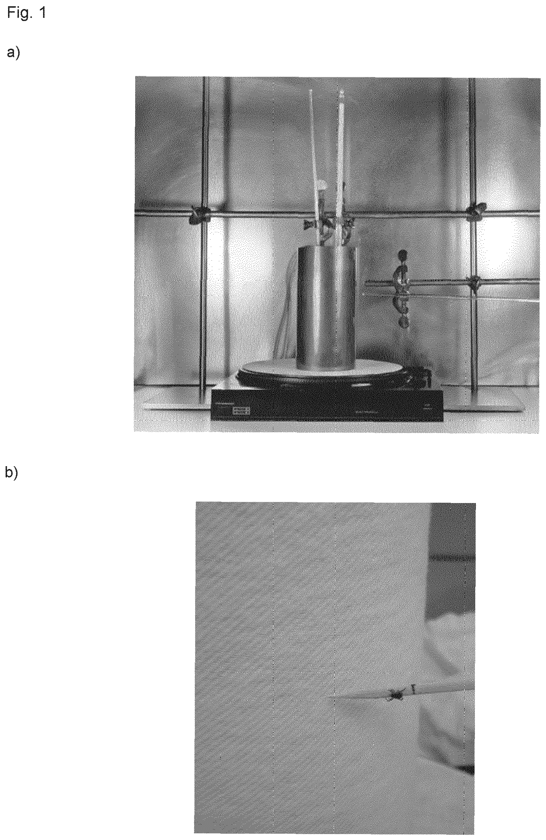

The drum consisted of brass (thickness: 1 mm). The outer diameter of the drum was 10 cm, and the height was 20 cm. The surface was covered by a piece of molton fabric (31.4 x 18 cm, Molton twill weave, Karstadt Warenhaus GmbH, Berlin, Germany) using double face adhesive tape. The fabric was sprayed with the test product or remained untreated. The ticks were placed on a horizontal wooden rod (diameter 3 mm) pointing to the drum and positioned such that the tip of it was close to the mid of the drum (Fig. 1a and 1b). The rotating time of the drum was set at 8-11 s per rotation, equivalent to a drum surface speed of 2.9 to 3.9 cm/s relative to the tick.

The repellent compositions and the positive controls were sprayed onto the molton fabric using separate 12 ml glass tube atomizers (Carl Roth GmbH + Co. KG, Karlsruhe, Germany) for each test product and the volume applied was determined by weighing the tubes before and after application. The target amount of solution sprayed was 1000 µl corresponding to 1.77 µl/cm2 for Repellent Composition 1 and 2825 µl corresponding to 5 µl/cm2 for Positive Control Composition 1. After application, the treated molton fabric dried under a fume hood at room temperature for 30 min. Residual samples were kept at 20.3 ± 0.6 °C and 30.7 ± 2.9 % RH for 7 d, 14 d, 21 d and 26 d before they were used in the MOB test runs.

The ticks were transferred into glass Petri dishes (diameter 9 cm) with a paintbrush, females and males separated. Ticks could acclimate to room conditions for about 15 min., and only active ticks moving on the edge of the Petri dishes were used for the test. A single tick was then placed with a featherweight forceps onto the rod, with its anterior side facing to the drum, at a distance of 2.5 - 3 cm to the tip of the rod. A small point marked a distance of 2 cm to the tip of the wooden rod. The test time started as soon as the tick passed this mark. Ticks dropping off the rod before reaching the mark were not counted. In each tick run, the durations of certain sequential tick behaviors were recorded using the software package "The Observer^{®} XT 12" (Noldus Information Technology bv, Wageningen, The Netherlands). The durations of the following behavioral steps of the ticks were recorded:
- the time from traversing the 2 cm-mark until reaching the tip of the rod (irrespective of whether the tick walked straight on or temporarily walked away and then back again in direction to the drum),
- the time from arrival at the tip until transfer to the drum (again, irrespective of intermittent tick movements),
- the time spent on the treated drum surface.

When the tick changed to the drum, the drum was stopped to facilitate observation of tick behavior. Each of the three behavioral steps was observed for a maximum of 2 min. If a tick did not progress to the next step within 2 min, the observation was stopped and the duration of the last behavioral step was counted as 2 min. In addition to the time recordings, it was noted whether the tick (i) walked to the drum and then (ii) changed onto the drum or remained stationary or walked away. It was also noted whether a tick (iii) dropped off at any stage of the test, particularly in course of changing to the drum or when in contact with the treated surface. For technical replication, the molton fabric was replaced by a newly treated one after testing 10 ticks (three replicates). Used drums were thoroughly cleaned with hot water and detergent, then rinsed with ethanol and rubbed with cleaning paper soaked with acetone. Finally, they were rinsed with ethanol, followed by water and dried. Paintbrushes and featherweight forceps used to handle the ticks were treated in the same way.

The test organism was the castor bean tick *Ixodes ricinus.* Adult ticks used in the bioassay were the F2 generation derived from adults collected in the vicinity of Berlin, Germany, in autumn 2014. Adult ticks were fed on rabbits (*Oryctolagus cuniculus*), larvae and nymphs on gerbils (*Meriones unguiculatus*)*.* All stages were constantly kept in desiccators at 90 % relative humidity (RH) provided by a saturated solution of MgSO4 according to Winston & Bates (1960; Ecology 41: 232-237). Engorged females were kept at a constant 20°C with a 16:8 light:dark cycle. Engorged larvae and nymphs developed under 18:6 light:dark cycles at 20 -21 °C. For experiments, unfed adults at an age of 7 months after ecdysis were used. The adults had been intermittently stored at 10°C and darkness for 5-7 weeks to simulate cold season. Cold storage is crucial to induce sufficient host searching activity. One week prior to and during the tests, the ticks were stored at 20.5 ± 1.2 °C and 95.9 ± 2.7 % RH (mean ± standard deviation) with a 16:8 light:dark cycle. Throughout the tests only such ticks were used, that readily moved or climbed out of their vial. Ticks remaining motionless on the bottom of their vial were not used. Each tick was tested only once.

Results for Repellent Composition 1:
Repellent composition 1 contained 2.5 wt.-% margosa oil, 2.5 wt.-% lauric acid and 95.0 wt.-% isopropyl myristate. It is formulated to be administered as a spot-on formulation.

As negative controls served ticks that were exposed to the same settings without a repellent.

The test was performed using 30 *lxodes ricinus* adults for controls and test products respectively. The ticks were tested individually, one by one. A test with 30 ticks lasted about 90 to 120 minutes. Prior to testing the repellent treated fabric, a control run with 30 ticks was performed using untreated fabric. If less than 70% of the ticks would have transferred to the drum in the control run, any subsequent test that day would have been abandoned. The total number of ticks tested was 270.

### Overall repellency

The overall Repellency was calculated. All ticks in a given test that (i) did not walk towards the drum, (ii) did not change to the drum or (iii) dropped off the drum were regarded as repelled. The Relative Repellency R was calculated according to the following formula: $R = 100 - \left(\left({p}_{t}/{p}_{c}\right)∗100\right)$ wherein pₜ is the percentage of ticks not repelled in the test, and p_{c} is the percentage of ticks not repelled in the control.

Relative repellency (30 min after application) determined for Repellent Composition 1 was 96.2 %. Residual repellency after 7 d was 92.9 %, after 14 d 92.6%, after 21 d 72.4 % and after 26 d 70.4 %. The control repellencies were between 3.3 % and 13.3 %. Repellency was significantly higher than the corresponding controls for all test timepoints (Table 1).

**Table 1:**

| **Test Composition** | **Time of Measurement [d]** | **Repellency [%]** | **Relative Repellency [%]** | **Significance** |
|---|---|---|---|---|
| Repellent Composition 1 | 0 | 96.7 | 96.2 | *** |
| Control 1 | 0 | 13.3 | - | - |
| Repellent Composition 1 | 7 | 93.3 | 92.9 | *** |
| Control 2 | 7 | 6.7 | - | - |
| Repellent Composition 1 | 14 | 93.3 | 92.6 | *** |
| Control 3 | 14 | 10.0 | - | - |
| Repellent Composition 1 | 21 | 73.3 | 72.4 | *** |
| Control 4 | 21 | 3.3 | - | - |
| Repellent Composition 1 | 26 | 73.3 | 70.4 | *** |
| Control 3 | 26 | 10.0 | - | - |

Next, the times the ticks spent on the drum were analyzed (Table 2).

The mean time the ticks spent on the drum (± SEM) was 38.5 ± 6.0 s in test runs with Repellent Composition 1 after 0 d, 48.1 ± 7.6 s in test runs after 7 d, 62.1 ± 6.6 s in test runs after 14 d, 62.6 ± 7.8 s in test runs after 21 d and 60.0 ± 8.7 s in test runs after 26 d. The mean time in the controls ranged between 88.4 ± 5.5 s and 109.7 ± 4.8 s. Tick residence time on the drum surface was significantly reduced for all tested timepoints compared to the corresponding control.

**Table 2:**

| **Test Composition** | **Time of Measurement [d]** | **Contact Time [s]** | **Significance** |
|---|---|---|---|
| Repellent Composition 1 | 0 | 38.5±6.0 | *** |
| Control 1 | 0 | 109.7±4.8 | - |
| Repellent Composition 1 | 7 | 48.1±7.6 | *** |
| Control 2 | 7 | 88.4±5.5 | - |
| Repellent Composition 1 | 14 | 62.1±6.6 | *** |
| Control 3 | 14 | 101.1±4.6 | - |
| Repellent Composition 1 | 21 | 62.6±7.8 | *** |
| Control 4 | 21 | 89.7±5.8 | - |
| Repellent Composition 1 | 26 | 60.0±8.7 | *** |
| Control 3 | 26 | 101.1±4.6 | - |

### Example 2: Efficacy test against ticks of an isopropanol control composition (not according to the invention)

The same test as described in Example 1 was performed for an isopropanol control composition. This composition contained 8 wt.-% margosa oil and 15 wt.-% acid, solved in isopropanol (99.5 %, Carl Roth GmbH + Co. KG, Karlsruhe, Germany). Therefore, 4 g margosa oil and 7.5 g lauric acid were solved in isopropanol. The final volume was 50 ml. The test measurements were only carried out on Day 0 (30 minutes after application). Overall Repellency was significantly higher for the isopropanol composition compared to control (Table 3).

**Table 3:**

| **Test Composition** | **Time of Measurement [d]** | **Repellency [%]** | **Relative Repellency [%]** | **Significance** |
|---|---|---|---|---|
| isopropanol composition | 0 | 96.7 | 96.4 | *** |
| Control | 0 | 6.7 | - | - |

The times the ticks spent on the drum was significantly shorter for isopropanol composition compared to control (mean±SEM), as shown in Table 4).

**Table 4:**

| **Test Composition** | **Time of Measurement [d]** | **Contact Time [s]** | **Significance** |
|---|---|---|---|
| isopropanol composition | 0 | 14.2±4.3 | *** |
| Control | 0 | 88.4±5.5 | - |

### Example 3: Efficacy test against ticks of Repellent Composition 2 (line-on)

The same test as described in Example 1 was performed for Repellent Composition 2. Repellent composition 2 contained 2.5 wt.-% margosa oil, 2.5 wt.-% lauric acid, 94.0 wt.-% isopropyl myristate, 0.75 wt.-% jojoba oil and 0.25 wt.-% evening primrose oil. It is formulated to be administered as a line-on formulation.

### Results for Repellent Composition 2:

Relative repellency (30 min after application) determined for Repellent Composition 2 was 100 %. Residual repellency after 7 d was 96.7%, after 14 d 86.7% and after 20 d 90.0 %.

The control repellencies were between 0.0 % and 6.7 %. Repellency was significantly higher than the corresponding controls for all test timepoints (Table 5).

**Table 5:**

| **Test Composition** | **Time of Measurement [d]** | **Repellency [%]** | **Relative Repellency [%]** | **Significance** |
|---|---|---|---|---|
| Repellent Composition 2 | 0 | 100 | 100 | *** |
| Control 1 | 0 | 6.7 | - | - |
| Repellent Composition 2 | 7 | 96.7 | 96.7 | *** |
| Control 2 | 7 | 0.0 | - | - |
| Repellent Composition 2 | 14 | 86.7 | 86.7 | *** |
| Control 2 | 14 | 0.0 | - | - |
| Repellent Composition 2 | 20 | 90.0 | 89.3 | *** |
| Control 1 | 20 | 6.7 | - | - |

The times the ticks spent on the drum were analyzed (Table 6).

The mean time the ticks spent on the drum (± SEM) was 16.0±6.4 s in test runs with Repellent Composition 2 after 0 d, 32.0±6.6 s in test runs after 7 d, 36.9±7.3 s in test runs after 14 d and 58.7±7.4 s in test runs after 20 d. The mean time in the controls ranged between 97.4±4.4 s and 101.8±5.2 s. Tick residence time on the drum surface was significantly reduced for all tested timepoints compared to the corresponding control.

**Table 6:**

| **Test Composition** | **Time of Measurement [d]** | **Contact Time [s]** | **Significance** |
|---|---|---|---|
| Repellent Composition 2 | 0 | 16.0±6.4 | *** |
| Control 1 | 0 | 101.8±5.2 | - |
| Repellent Composition 2 | 7 | 32.0±6.6 | *** |
| Control 2 | 7 | 97.4±4.4 | - |
| Repellent Composition 2 | 14 | 36.9±7.3 | *** |
| Control 2 | 14 | 97.4±4.4 | - |
| Repellent Composition 2 | 20 | 58.7±7.4 | *** |
| Control 1 | 20 | 101.8±5.2 | - |

### Example 4: Efficacy test against fleas of Repellent Composition 1 (spot-on)

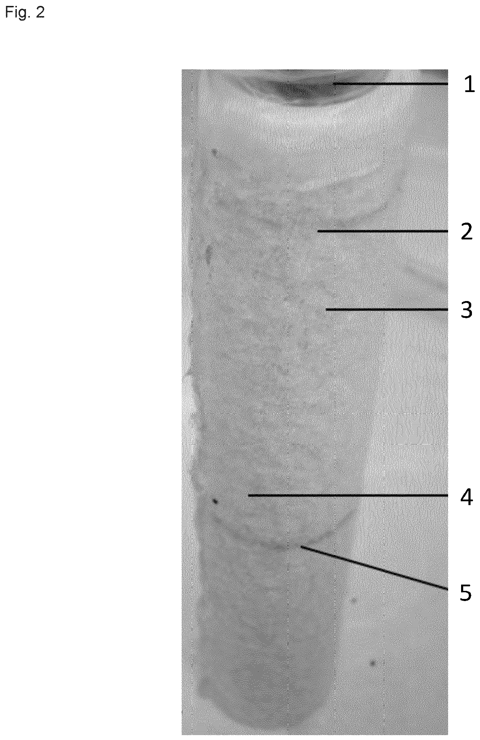

A Static Object Bioassay (SOB) was conducted. As can be seen in Fig. 2, fleas were placed on the bottom of a test arena (glass 34.5 cm diameter, 25 cm height) where they could approach and jump on a warmed "artificial animal leg". This "artificial leg" consists of a glass cylinder (diameter 3 cm, height 25.5 cm, 100 ml, Carl Roth GmbH + Co. KG, Karlsruhe, Germany) which is covered by a wool fabric of 0.5 cm height and an area of 49.59 ± 0.55 mg/cm3 (mean ± SD) (= loden cloth, Stoff-Ideen KMR GmbH, Berlin, Germany) using double face adhesive tape and hot adhesion glue. The glass cylinder is filled with preheated bovine blood / phosphate buffer mix (half/half) and evaporated blood scent (emitting host attractive scent). The fabric is marked with a 10 cm- and a 20 cm-zone and the surface temperature of the cylinder is kept in mean at 36 °C (similar to the external body temperature) and measured remotely by an infrared thermometer (PCE_MF1 InfraRed Thermometer, PCE Deutschland GmbH, Meschede, Germany). The repellency of the test compositions was evaluated by the time and distance fleas stayed or walked on the treated surface. If the fabric was treated with test product, the repellent effect could be detected either by (i) a reduced number of fleas climbing on the "leg" or (ii) an increased number of fleas falling off the "leg" compared to the control runs. On the warmed surface the fleas showed the same behavior as in nature when they enter the host and searching for a position to bite. It was thus possible to discriminate between contact repellents and substances acting over short distance. Repelled fleas were defined by the number of fleas not climbing to the fabric or dropping off the fabric.

The target amount of solution sprayed was 408.87 µl corresponding to 1.77 µl/cm2 for Repellent Composition 1 and 1155 µl of Positive Control Composition 1. The test compositions were sprayed onto the loden fabric using separate 12 ml glass tube atomizers (Carl Roth GmbH + Co. KG, Karlsruhe, Germany) for each test composition and the volume applied was determined by weighing the tubes before and after application. The control was sprayed with the same amount of water (as control for the spot-on) or isopropanol (2-propanol 99.5 % as control of the isopropanolic solution). After a drying period of 30 min at room temperature the piece of fabric was fixed with double-sided tape and hot adhesion clue on the surface of the glass cylinder before this was subsequently used in the test run. After application, the treated loden fabric dried under a fume hood at room temperature for 30-50 before they were used in the SOB test runs.

Each test run involved testing of 30 fleas, one after each other, females and males separated. Fleas could acclimate to room conditions for at least 2 hours and only active fleas jumping within the vessel were used for the test. Then a single individuum was transferred into the bottom of the glass arena, on the filter paper with help of a vessel at a distance of 3-7 cm to the "artificial leg". The test time started as soon as the flea reached the bottom of the arena.

For each flea, the durations of certain sequential behaviors were recorded using the software package "The Observer^{®} XT 12" (Noldus Information Technology, Wageningen, The Netherlands). The durations of the following behavioral steps of the fleas were recorded:
a) climbing to the fabric
b) walking (or jump) >10 cm on the fabric
c) walking >20 cm on the fabric
d) dropping off the fabric <20 cm (within 120s)

The maximal observation time slot of an individual flea was 4 minutes, in detail 120s for step a) and ≤120s for the steps b)-d). The observation time slot of an individual flea was 4 minutes at maximum.

For technical repetition the fabric was changed after every 10th flea and replaced by a new one (new sprayed fabric). Used mess cylinders were thoroughly cleaned after each technical replication with hot water and detergent, then rinsed with ethanol and rubbed with cleaning paper soaked with acetone. Finally, they were rinsed with ethanol, followed by water and dried. The glass arena was treated in the same way.

The test organism was *Ctenocephalides felis* (cat flea). Cat flea pupae were obtained from an external colony. In this colony adults were fed on artificial membranes with bovine blood and larvae were reared on a standard diet for larvae (consisting of sand, blood meal, yeast, dog biscuits). For further development of the cat flea pupae the pupae were kept inside polystyrene vessels (13 x 9.5 x 6.5 cm (I x w x h); Modulor GmbH, Berlin, Germany) with gauze covers and stored inside desiccators at 18:6 light:dark cycles at 25°C and 76 % RH. The humidity inside the desiccators was provided by means of a saturated solution of NaCl according to Winston & Bates (1960). Eclosed adults had been intermittently stored inside glass tubes with gauze covers at 14°C, 76 % RH and darkness for 1 - 2.5 weeks until use for the bioassay. Cat flea adults used in the bioassay were unfed and between 8-18 days old. They were separated into containers (half of the containers with males and the other half with females) and acclimated at 20°C and 76 % RH for a minimum of two hours before testing. Each cat flea was tested only once.

### Results for Repellent Composition 1:

As negative controls served fleas that were exposed to the same settings without a repellent.

The test was performed using 30 *Ctenocephalides felis* adults for controls and test compositions, respectively. The fleas were tested individually, one by one. Prior to testing the repellent treated fabric, a control run with 30 fleas was performed using untreated fabric. This control served to prove sufficient activity of the fleas and to exclude any repellent efficacy caused through the fabric. If less than 70 % of the fleas would have clung to the fabric surface from the bottom of the arena in the control run, any subsequent test that day would have been abandoned. The total number of fleas tested for the test compositions and the controls was 120.

The Overall Repellency was calculated as described in Example 1.

Relative repellency (30 min after application) determined for Repellent Composition 1 was 100 %, while the control repellency was 3.3 %. Repellency was significantly higher than the corresponding control (Table 7).

**Table 7:**

| **Test Composition** | **Time of Measurement [d]** | **Repellency [%]** | **Relative Repellency [%]** | **Significance** |
|---|---|---|---|---|
| Repellent Composition 1 | 0 | 100 | 100 | *** |
| Control | 0 | 3.3 | - | - |

Next, the time the fleas spent on the "artificial leg" were analyzed (Table 8).

The mean time the fleas spent on the drum (± SEM) was 17.0±2.7 s in test runs with Repellent Composition 1 after 0 d, while the mean time in the controls was 117.5±1.7 s. The flea residence time on the "artificial leg" was significantly reduced compared to control.

**Table 8:**

| **Test Composition** | **Time of Measurement [d]** | **Contact Time [s]** | **Significance** |
|---|---|---|---|
| Repellent Composition 1 | 0 | 17.0±2.7 | *** |
| Control | 0 | 117.5±1.7 | - |

### Example 5: Efficacy test against fleas of the isopropanol composition (not according to the invention)

The same test as described in Example 4 was performed for the isopropanol composition of Example 2.

Overall Repellency was significantly higher for the isopropanol composition compared to control (Table 9).

**Table 9:**

| **Test Composition** | **Time of Measurement [d]** | **Repellency [%]** | **Relative Repellency [%]** | **Significance** |
|---|---|---|---|---|
| isopropanol composition | 0 | 100 | 100 | *** |
| Control | 0 | 0.0 | - | - |

The times the fleas spent on the "artificial leg" was significantly shorter for isopropanol composition compared to control (mean±SEM), as shown in Table 10).

**Table 10:**

| **Test Composition** | **Time of Measurement [d]** | **Contact Time [s]** | **Significance** |
|---|---|---|---|
| isopropanol composition | 0 | 15.5±1.6 | *** |
| Control | 0 | 114.0±3.1 | - |

### Example 6: Efficacy test against fleas of margosa oil

The efficacy against fleas was tested for a margosa oil composition containing 8 wt.-% margosa oil in isopropanol.

Overall Repellency was significantly higher for the margosa oil composition compared to control (Table 11).

**Table 11:**

| **Test Composition** | **Time of Measurement [d]** | **Repellency [%]** | **Relative Repellency [%]** |
|---|---|---|---|
| margosa oil composition | 0 | 35.3 | 35.3 |
| Control | 0 | 0.0 | - |

### Example 7: Efficacy test against fleas of lauric acid

The efficacy against fleas was tested for a lauric acid composition containing 15 wt.-% lauric acid in isopropanol.

Overall Repellency was significantly higher for the lauric acid composition compared to control (Table 12).

**Table 12:**

| **Test Composition** | **Time of Measurement [d]** | **Repellency [%]** | **Relative Repellency [%]** |
|---|---|---|---|
| lauric acid composition | 0 | 98.0 | 98.0 |
| Control | 0 | 0.0 | - |

### Figures

Fig. 1 shows the experimental set-up of the Moving Object Bioassay (MOB), as used in Experiments 1 to 3.
   a) Rotating drum
   b) An adult tick walking on the rod ready to cling to the drum
Fig. 2 shows the experimental set-up of the Static Object Bioassay (SOB), as used in Experiments 4 and 5. An "artificial leg" consisting of a glass cylinder covered by wool is used to evaluate the repellency by the time and distance fleas stayed or walked on the treated fabric. The glass cylinder was filled with bovine blood / phosphate buffer mix (half/half) kept at 36°C. The glass cylinder is placed in a glass arena (diameter 34.5 cm, height 25 cm). The bottom is covered with filter paper.
   1: heated blood / buffer mix evaporating through Parafilm^{®} with holes
   2: 20 cm marking
   3: glass cylinder covered with wool
   4: flea entered the surface
   5: 10 cm marking

## Claims

1. Repellent composition, containing margosa oil, lauric acid, and at least one C₁₂ - C₁₆ fatty acid ester, wherein said at least one C₁₂ - C₁₆ fatty acid ester is a saturated C₁₂ - C₁₆ monocarboxylic acid esterified with a C₁ - C₄ alcohol.

2. Repellent composition according to claim 1, wherein said C₁ - C₄ alcohol is isopropanol.

3. Repellent composition according to claim 1 or 2, wherein the at least one C₁₂ - C₁₆ fatty acid ester is selected from a group comprising isopropyl laurate, isopropyl myristate and isopropyl palmitate.

4. Repellent composition according to any of claims 1 to 3, wherein the composition contains 1 to 5 wt.-% of margosa oil.

5. Repellent composition according to any of claims 1 to 4, wherein the composition contains 1 to 5 wt.-% of lauric acid.

6. Repellent composition according to any of claims 1 to 5, wherein the composition contains 80 to 98 wt.-% of the at least one C₁₂ - C₁₆ fatty acid ester, wherein said at least one C₁₂ - C₁₆ fatty acid ester is a saturated C₁₂ - C₁₆ monocarboxylic acid esterified with a C₁ - C₄ alcohol.

7. Repellent composition according to any of claims 1 to 6, additionally containing 0 to 10 wt.-% of an excipient.

8. Repellent composition according to any of claims 1 to 4, wherein the composition contains 2.5 wt.-% margosa oil, 2.5 wt.-% lauric acid, 85 to 95 wt.-% isopropyl myristate and 0 to 10 wt.-% of an excipient.

9. Non-therapeutic use of the repellent composition as defined in any of claims 1 to 8 for topical application to living creatures.

10. Non-therapeutic use of the repellent composition for topical application according to claim 9, wherein the living creature is a human, a dog, a cat or a horse.

11. Non-therapeutic use of the repellent composition for topical application according to claim 9 or 10, wherein said repellent composition is a spot-on formulation.

12. Non-therapeutic use of the repellent composition as defined in any of claims 1 to 8 as an arthropod repellent in agriculture.

13. Non-therapeutic use of the repellent composition as an arthropod repellent in agriculture according to claim 12, wherein said repellent composition is used in combination with at least one pesticide.

14. Non-therapeutic use of the repellent composition as an arthropod repellent in agriculture according to claim 13, wherein said at least one pesticide is selected from a group comprising herbicides, insecticides, acaricides, algicides, nematicides, molluscicides, piscicides, avicides, rodenticides, bactericides, virucides, fungicides and slimicides.

## Patentansprüche

1. Repellierende Zusammensetzung, die Margosaöl, Laurinsäure und mindestens einen C₁₂-C₁₆-Fettsäureester enthält, wobei der mindestens eine C₁₂-C₁₆-Fettsäureester ein gesättigter C₁₂-C₁₆-Monocarbonsäureester ist, der mit einem C1-C4-Alkohol verestert ist.

2. Repellierende Zusammensetzung gemäß Anspruch 1, wobei der C1-C4-Alkohol Isopropanol ist.

3. Repellierende Zusammensetzung gemäß Anspruch 1 oder 2, wobei der mindestens eine C₁₂-C₁₆-Fettsäureester aus einer Gruppe ausgewählt wird, die Isopropyllaurat, Isopropylmyristat und Isopropylpalmitat umfasst.

4. Repellierende Zusammensetzung gemäß einem der Ansprüche 1 bis 3, wobei die Zusammensetzung 1 bis 5 Gew.-% Margosaöl enthält.

5. Repellierende Zusammensetzung gemäß einem der Ansprüche 1 bis 4, wobei die Zusammensetzung 1 bis 5 Gew.-% Laurinsäure enthält.

6. Repellierende Zusammensetzung gemäß einem der Ansprüche 1 bis 5, wobei die Zusammensetzung 80 bis 98 Gew.-% des mindestens einen C₁₂-C₁₆-Fettsäureesters enthält, wobei der mindestens eine C₁₂-C₁₆-Fettsäureester ein gesättigter C₁₂-C₁₆-Monocarbonsäureester ist, der mit einem C₁-C₄-Alkohol verestert ist.

7. Repellierende Zusammensetzung gemäß einem der Ansprüche 1 bis 6, die zusätzlich 0 bis 10 Gew.-% eines Excipients enthält.

8. Repellierende Zusammensetzung gemäß einem der Ansprüche 1 bis 4, wobei die Zusammensetzung 2,5 Gew.-% Margosaöl, 2,5 Gew.-% Laurinsäure, 85 bis 95 Gew.-% Isopropylmyristat und 0 bis 10 Gew.-% eines Excipients enthält.

9. Nichttherapeutische Verwendung der in einem der Ansprüche 1 bis 8 definierten repellierenden Zusammensetzung zur topischen Anwendung bei Lebewesen.

10. Nichttherapeutische Verwendung der repellierenden Zusammensetzung zur topischen Anwendung gemäß Anspruch 9, wobei das Lebewesen ein Mensch, ein Hund, eine Katze oder ein Pferd ist.

11. Nichttherapeutische Verwendung der repellierenden Zusammensetzung zur topischen Anwendung gemäß einem der Ansprüche 9 oder 10, wobei die besagte repellierende Zusammensetzung eine Spot-on-Formulierung ist.

12. Nichttherapeutische Verwendung der in einem der Ansprüche 1 bis 8 definierten repellierenden Zusammensetzung als ein Arthropoden-Repellent in der Landwirtschaft.

13. Nichttherapeutische Verwendung der repellierenden Zusammensetzung als ein Arthropoden-Repellent in der Landwirtschaft gemäß Anspruch 12, wobei die besagte repellierende Zusammensetzung in Kombination mit mindestens einem Pestizid verwendet wird.

14. Nichttherapeutische Verwendung der repellierenden Zusammensetzung als ein Arthropoden-Repellent in der Landwirtschaft gemäß Anspruch 13, wobei das mindestens eine Pestizid aus einer Gruppe ausgewählt wird, die Herbizide, Insektizide, Akarizide, Algizide, Nematizide, Molluskizide, Fischgifte, Vogelgifte, Rodentizide, Bakterizide, Viruzide, Fungizide und Schleimbekämpfungsmittel umfasst.

## Revendications

1. Composition répulsive contenant de l'huile de margosa, de l'acide laurique et au moins un ester d'acide gras en C₁₂-C₁₆, dans laquelle cet au moins un ester d'acide gras en C₁₂-C₁₆ est un ester d'acide monocarboxylique saturé en C₁₂-C₁₆ estérifié avec un alcool en C₁-C₄.

2. Composition répulsive selon la revendication 1, dans laquelle l'alcool en C₁-C₄ est l'isopropanol.

3. Composition répulsive selon la revendication 1 ou 2, dans laquelle ledit au moins un ester d'acide gras en C₁₂-C₁₆ est choisi parmi un groupe comprenant le laurate d'isopropyle, le myristate d'isopropyle et le palmitate d'isopropyle.

4. Composition répulsive selon quelconque des revendications 1 à 3, dans laquelle la composition contient 1 à 5 % en poids d'huile de margosa.

5. Composition répulsive selon quelconque des revendications 1 à 4, dans laquelle la composition contient 1 à 5 % en poids d'huile d'acide laurique.

6. Composition répulsive selon quelconque des revendications 1 à 5, dans laquelle la composition contient 80 à 98 % en poids de cet au moins un ester d'acide gras en C₁₂-C₁₆, cet au moins un ester d'acide gras en C₁₂-C₁₆ étant un ester d'acide monocarboxylique saturé en C₁₂-C₁₆ estérifié avec un alcool en C₁-C₄.

7. Composition répulsive selon quelconque des revendications 1 à 6, qui contient en outre 0 à 10 % en poids d'un excipient.

8. Composition répulsive selon quelconque des revendications 1 à 4, dans laquelle la composition contient 2,5 % en poids d'huile de margosa, 2,5 % en poids d'acide laurique, 85 à 95 % en poids de myristate d'isopropyle et 0 à 10 % en poids d'un excipient.

9. Utilisation non thérapeutique de la composition répulsive définie dans l'une des revendications 1 à 8, en application topique chez des êtres vivants.

10. Utilisation non thérapeutique de la composition répulsive en application topique selon la revendication 9, dans laquelle l'être vivant est un être humain, un chien, un chat ou un cheval.

11. Utilisation non thérapeutique de la composition répulsive en application topique selon quelconque des revendications 9 ou 10, dans laquelle ladite composition répulsive se présente sous la forme d'une formulation « spot-on ».

12. Utilisation non thérapeutique de la composition répulsive définie dans une des revendications 1 à 8 comme répulsif d'arthropode dans l'agriculture.

13. Utilisation non thérapeutique de la composition répulsive comme répulsif d'arthropode dans l'agriculture selon la revendication 12, dans laquelle ladite composition répulsive est utilisée en combinaison avec au moins un pesticide.

14. Utilisation non thérapeutique de la composition répulsive comme répulsif d'arthropode dans l'agriculture selon la revendication 13, dans laquelle ledit au moins un pesticide est choisi parmi un groupe comprenant les herbicides, les insecticides, les acaricides, les algicides, les nématicides, les molluscicides, les poisons pour poissons, les poisons pour oiseaux, les rodenticides, les bactéricides, les virucides, les fongicides et les agents anti-mucus.
